(19) Europäisches Patentamt
European Patent Office
Office européen des brevets

(11) **EP 2 502 032 B1**

(12) **EUROPÄISCHE PATENTSCHRIFT**

(45) Veröffentlichungstag und Bekanntmachung des Hinweises auf die Patenterteilung:
**04.12.2019  Patentblatt 2019/49**

(51) Int Cl.:
***G01F 1/84*** *(2006.01)*      ***G01F 15/00*** *(2006.01)*
***G01F 15/14*** *(2006.01)*

(21) Anmeldenummer: **10763194.7**

(22) Anmeldetag: **11.10.2010**

(86) Internationale Anmeldenummer:
**PCT/EP2010/065166**

(87) Internationale Veröffentlichungsnummer:
**WO 2011/061009 (26.05.2011 Gazette 2011/21)**

(54) **MESSSYSTEM MIT EINER ZWEI PARALLEL DURCHSTRÖMTE MESSROHRE AUFWEISENDEN ROHRANORDNUNG SOWIE VERFAHREN ZU DEREN ÜBERWACHUNG**

MEASUREMENT SYSTEM HAVING A PIPE ASSEMBLY HAVING TWO MEASUREMENT PIPES WHICH ARE FLOWED THROUGH IN PARALLEL AND METHOD FOR THE MONITORING THEREOF

SYSTÈME DE MESURE MUNI D'UN ENSEMBLE DE TUBES PRÉSENTANT DEUX TUBES DE MESURE PARCOURUS EN PARALLÈLE PAR UN MILIEU ET PROCÉDÉ DE SURVEILLANCE DUDIT ENSEMBLE DU TUBES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2009   DE 102009046839**

(43) Veröffentlichungstag der Anmeldung:
**26.09.2012   Patentblatt 2012/39**

(73) Patentinhaber: **Endress+Hauser Flowtec AG**
**4153 Reinach (CH)**

(72) Erfinder:
• **DRAHM, Wolfgang**
  **85435 Erding (DE)**
• **HUBER, Christof**
  **3007 Bern (CH)**
• **KUMAR, Vivek**
  **CH-4132 Muttenz (CH)**
• **RIEDER, Alfred**
  **84032 Landshut (DE)**
• **ZHU, Hao**
  **85354 Freising (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**EP-A2- 0 261 435     DE-A1-102005 050 898**
**JP-A- 11 264 635     US-A- 5 602 346**

**Beschreibung**

Die Erfindung betrifft ein Verfahren zur Überwachung einer mittels eines ersten Messrohrs und wenigstens eines dazu strömungstechnisch parallel geschalteten zweiten Messrohrs gebildeten Rohranordnung. Rohranordnung. Draüberhinaus betrifft die Erfindung ein zur Realisierung nämlichen Verfahrens geeignetes, insb. als ein Kompakt-Meßgerät und/oder ein Coriolis-Massedurchfluß-Meßgerät ausgebildetes, Meßsystem für fließfähige, insb. fluide, Medien, das einen im Betrieb zumindest zeitweise von Medium durchströmten, von wenigstens einer das strömende Medium charakterisierenden Meßgröße, insb. einem Massendurchfluß, einer Dichte, einer Viskosität etc., beeinflußte Meßsignale generierenden Meßwandler sowie eine mit dem Meßwandler elektrisch gekoppelte und vom Meßwandler gelieferte Meßsignale zu Meßwerten verarbeitende Umformer-Elektronik umfaßt.

In der industriellen Meßtechnik werden, insb. auch im Zusammenhang mit der Regelung und Überwachung von automatisierten verfahrenstechnischen Prozessen, zur Ermittlung von charakteristischen Meßgrößen von in einer Prozeßleitung, beispielsweise einer Rohrleitung, strömenden Medien, beispielsweise von Flüssigkeiten und/oder Gasen, oftmals solche Meßsysteme verwendet, die mittels eines Meßwandlers vom Vibrationstyp und einer daran angeschlossenen, zumeist in einem separaten Elektronik-Gehäuse untergebrachten, Umformer-Elektronik, im strömenden Medium Reaktionskräfte, beispielsweise Corioliskräfte, induzieren und von diesen abgeleitet wiederkehren die wenigstens eine Meßgröße, beispielsweise eine Massedurchflußrate, einer Dichte, einer Viskosität oder einem anderen Prozeßparameter, entsprechend repräsentierende Meßwerte erzeugen. Derartige - oftmals mittels eines In-Line-Meßgeräts in Kompaktbauweise mit integriertem Meßwandler, wie etwa einem Coriolis-Massedurchflußmesser, gebildete - Meßsysteme sind seit langem bekannt und haben sich im industriellen Einsatz bewährt. Beispiele für solche Meßsysteme mit einem Meßwandler vom Vibrationstyp oder auch einzelnen Komponenten davon, sind z.B. in der US-A 46 80 974, der US-A 47 38 144, der US-A 47 68 384, der US-A 48 01 897, der US-A 48 23 614, der US-A 48 79 911, der US-A 50 09 109, der US-A 50 50 439, der US-A 53 59 881, der US-A 56 02 345, der US-A 57 34 112, der US-A 57 96 011, der US-A 59 26 096, der US-A 59 69 264, US-B 71 27 952, der US-A 60 92 429, der US-B 63 11 136, der US-B 68 83 387, der US-B 73 25 461, der US-B 73 92 709, der US-B 74 21 350, der WO-A 96/08697 oder der WO-A 2007/040468 beschrieben. Darin gezeigte Meßwandler umfassen wenigstens zwei in einem Meßwandler-Gehäuse untergebrachte, im wesentlichen gerade oder gekrümmte, z.B. U-, oder V-förmige, Meßrohre zum Führen des, gegebenenfalls auch inhomogenen, extrem heißen oder auch sehr zähen, Mediums, wobei die wenigstens zwei Meßrohren unter Bildung einer Rohranordnung mit zueinander parallel geschalteten Strömungspfaden über ein sich zwischen den Meßrohren und einem einlaßseitigen Anschlußflansch erstreckenden einlaßseitig Strömungsteiler sowie über ein sich zwischen den Meßrohren und einem auslaßseitigen Anschlußflansch erstreckenden auslaßseitig Strömungsteiler in die Prozeßleitung eingebunden sind. Im Meßbetrieb werden die dann parallel durchströmten Meßrohre zwecks Generierung von durch das hindurchströmende Medium mit beeinflußten Schwingungsformen vibrieren gelassen. Zum Erfassen einer Temperatur der Meßrohre bzw. des darin geführten Medium weisen beispielsweise die in der US-A 47 68 384 oder US-A 56 02 345 gezeigten Meßwandler jeweils eine mittels eines direkt an einem der Meßrohre fixierten Temperatursensor zum Erzeugen eines von einer Temperatur des Meßrohrs abhängigen Temperatursignals auf.

Als angeregte Schwingungsform - dem sogenannten Nutzmode - wird bei Meßwandlern mit gekrümmtem Meßrohren üblicherweise jene Eigenschwingungsform gewählt, bei denen jedes der Meßrohre zumindest anteilig bei einer niedrigsten natürlichen Resonanzfrequenz um eine gedachte Längsachse des Meßwandlers nach Art eines an einem Ende eingespannten Auslegers pendelt, wodurch im hindurchströmenden Medium vom Massendurchfluß abhängige Corioliskräfte induziert werden. Diese wiederum führen dazu, daß den angeregten Schwingungen des Nutzmodes, im Falle gekrümmter Meßrohre also pendelartigen Auslegerschwingungen, dazu gleichfrequente Biegeschwingungen gemäß wenigstens einer ebenfalls natürlichen zweiten Schwingungsform, dem sogenannten Coriolismode, überlagert werden. Bei Meßwandlern mit gekrümmtem Meßrohr entsprechen diese durch Corioliskräfte erzwungenen Auslegerschwingungen im Coriolismode üblicherweise jener Eigenschwingungsform, bei denen das Meßrohr auch Drehschwingungen um eine senkrecht zur Längsachse ausgerichtete gedachte Hochachse ausführt. Bei Meßwandlern mit geradem Meßrohr hingegen wird zwecks Erzeugung von massendurchflußabhängigen Corioliskräften oftmals ein solcher Nutzmode gewählt, bei dem jedes der Meßrohre zumindest anteilig Biegeschwingungen im wesentlichen in einer einzigen gedachten Schwingungsebene ausführt, so daß die Schwingungen im Coriolismode dementsprechend als zu den Nutzmodeschwingungen komplanare Biegeschwingungen gleicher Schwingfrequenz ausgebildet sind. Zum Erregen von Schwingungen der wenigstens zwei Meßrohre weisen Meßwandler vom Vibrationstyp des weiteren eine im Betrieb von einem von der erwähnten Treiberelektronik generierten und entsprechend konditionierten elektrischen Treibersignal, z.B. einem geregelten Strom, angesteuerte Erregeranordnung auf, die das Meßrohr mittels wenigstens eines im Betrieb von einem Strom durchflossenen, auf die wenigstens zwei Meßrohre praktisch direkt, insb. differentiell, einwirkenden elektro-mechanischen, insb. elektro-dynamischen, Schwingungserregers zu, insb. gegengleichen, Biegeschwingungen im Nutzmode anregt. Desweiteren umfassen derartige Meßwandler eine Sensoranordnung mit, insb. elektro-dynamischen, Schwingungssensoren zum zumindest punktuellen Erfassen einlaßseitiger und auslaßseitiger Schwingungen wenigstens eines der Meßrohre, insb. gegengleichen Biegeschwingungen der Meßrohre im Coriolismode, und zum Erzeugen von vom zu erfassenden Prozeßparameter, wie etwa dem Massedurchfluß oder der Dichte, beeinflußten, als Vibrationssignale des Meßwandlers dienenden elektrischen Sensorsignalen. Wie beispielsweise in der US-B 73 25 461 beschrieben können bei Meßwandlern der in Rede stehenden Art gegebenenfalls auch der Schwingungserreger zumindest zeitweise als Schwingungssensor und/oder ein Schwingungssensor zumindest zeitweise als Schwingungserreger verwendet werden. Die Erregeranordnung von Meßwandlern der in Rede stehenden Art weist üblicherweise wenigstens einen elektrodynamischen und/oder differentiell auf die Meßrohre einwirkenden Schwingungserreger auf, während die Sensoranordnung einen einlaßseitigen, zumeist ebenfalls elektrodynamischen, Schwingungssensor sowie wenigstens einen dazu im wesentlichen baugleichen auslaßseitigen Schwingungssensor umfaßt. Solche elektrodynamischen und/oder differentiellen Schwingungserreger marktgängiger Meßwandler vom Vibrationstyp sind mittels einer zumindest zeitweise von einem Strom durchflossenen an einem der Meßrohre fixierten Magnetspule sowie einen mit der wenigstens einen Magnetspule wechselwirkenden, insb. in diese eintauchenden, als Anker dienenden eher länglichen, insb. stabförmig ausgebildeten, Dauermagneten gebildet, der entsprechend am anderen, gegengleich zu bewegenden Meßrohr fixiert ist. Der Dauermagnet und die als Erregerspule dienende Magnetspule sind dabei üblicherweise so ausgerichtet, daß sie zueinander im wesentlichen koaxial verlaufen. Zudem ist bei herkömmlichen Meßwandlern die Erregeranordnung üblicherweise derart ausgebildet und im Meßwandler plazierte, daß sie jeweils im wesentlichen mittig an die Meßrohre angreift. Dabei ist der Schwingungserreger und insoweit die Erregeranordnung, wie beispielsweise auch bei den in der vorgeschlagenen Meßwandlern gezeigt, zumindest punktuell entlang einer gedachten mittigen Umfangslinie des jeweiligen Meßrohrs außen an diesem fixiert. Alternativ zu einer mittels eher zentral und direkt auf die jeweiligen Meßrohr wirkenden Schwingungserregern gebildeten Erregeranordnung können, wie u.a. in der US-A 60 92 429 oder der US-A 48 23 614 vorgeschlagen, beispielsweise auch mittels zweier, jeweils nicht im Zentrum des jeweiligen Meßrohrs, sondern eher ein- bzw. auslaßseitig an diesem fixierten Schwingungserreger gebildete Erregeranordnungen verwendet werden. Bei den meisten marktgängigen Meßwandlern vom Vibrationstyp sind die Schwingungssensoren der Sensoranordnung zumindest insoweit im wesentlichen baugleich ausgebildet wie der wenigstens eine Schwingungserreger, als sie nach dem gleichen Wirkprinzip arbeiten. Dementsprechend sind auch die Schwingungssensoren einer solchen Sensoranordnung zumeist jeweils mittels wenigstens einer an einem der Meßrohre fixierten, zumindest zeitweise von einem veränderlichen Magnetfeld durchsetzte und damit einhergehend zumindest zeitweise mit einer induzierten Meßspannung beaufschlagten sowie einem an einem anderen der Meßrohre fixierten, mit der wenigstens eine Spule zusammenwirkenden dauermagnetischen Anker gebildet, der das Magnetfeld liefert. Jede der vorgenannten Spulen ist zudem mittels wenigstens eines Paars elektrischer Anschlußleitungen mit der erwähnten Umformer-Elektronik des In-Line-Meßgeräts verbunden, die zumeist auf möglichst kurzem Wege von den Spulen hin zum Meßwandler-Gehäuse geführt sind. Aufgrund der Überlagerung von Nutz- und Coriolismode weisen die mittels der Sensoranordnung einlaßseitig und auslaßseitig erfaßten Schwingungen der vibrierenden Meßrohre eine auch vom Massedurchfluß abhängige, meßbare Phasendifferenz auf. Üblicherweise werden die Meßrohre derartiger, z.B. in Coriolis-Massedurchflußmessern eingesetzte, Meßwandler im Betrieb auf einer momentanen natürlichen Resonanzfrequenz der für den Nutzmode gewählten Schwingungsform, z.B. bei konstantgeregelter Schwingungsamplitude, angeregt. Da diese Resonanzfrequenz im besonderen auch von der momentanen Dichte des Mediums abhängig ist, kann mittels marktüblicher Coriolis-Massedurchflußmesser neben dem Massedurchfluß zusätzlich auch die Dichte von strömenden Medien gemessen werden. Ferner ist es auch möglich, wie beispielsweise in der US-B 66 51 513 oder der US-B 70 80 564 gezeigt, mittels Meßwandlern vom Vibrationstyp, Viskosität des hindurchströmenden Mediums direkt zu messen, beispielsweise basierend auf einer für die Aufrechterhaltung der Schwingungen erforderlichen Erregerenergie bzw. Erregerleistung und/oder basierend auf einer aus einer Dissipation von Schwingungsenergie resultierenden Dämpfung von Schwingungen des wenigstens einen Meßrohrs, insb. denen im vorgenannten Nutzmode. Darüberhinaus können auch weitere, aus den vorgenannten primären Meßwerten Massedurchflußrate, Dichte und Viskosität abgeleitete Meßgrößen, wie etwa gemäß der US-B 65 13 393 die Reynoldszahl zu ermittelt werden.

Besonders bei Verwendung von Meßsystemen der vorgenannten Art zum Messen von hochviskosen, beispielsweise pastösen, teigigen oder schlammartigen, Medien oder auch zum Messen solcher Medien, bei denen Feststoffe mit Durchmessern in der Größenordnung eines Kalibers eines Meßrohrs mitgeführt werden, wie z.B. bei steinhaltigen Schlämmen, Beton, Früchtebreien etc., existiert ein erhöhtes Risiko dafür, daß eines der Meßrohre teilweise oder ganz verstopft ist, beispielsweise infolge eines in einem der Meßrohre festgeklemmten Feststoffs, während das andere der Meßrohre nach wie vor von Medium durchströmt ist. Infolge einer solchen teilweisen Verstopfung der Rohranordnung ist der Meßwandler unerkannt nur noch asymmetrisch durchströmt, ggf. auch derart, daß lediglich in einem der Meßrohre Medium strömt bzw. eines der Meßrohre nicht mehr durchströmt ist. Allerdings ist solch eine asymmetrische Durchströmung des Meßwandlers bzw. eine dies verursachende teilweise Verstopfung der Rohranordnung mit konventionellen Meßsystemen der in Rede stehenden Art im Meßbetrieb - hier also bei durch den Meßwandler strömendem Medium und im Nutzmode schwingenden Meßrohren - bislang nicht detektiert bzw. überhaupt zu detektieren versucht worden. Zwar ist in der eingangs erwähnten US-B 74 21 350 ein Verfahren zur Detektion von im Meßwandler nach dessen Entleeren verbliebenem Mediumsresten vorgeschlagen worden, das entsprechend auch zur Detektion von Verstopfung verwendet werden kann, wobei anhand eines Überschreiten eines für einen von den Vibrationssignalen abgeleiteten Schwingungsparameter, wie z.B. eine Resonanzfrequenz des Nutzmodes, bei entleertem Meßsystem gesetzten Grenzwertes festgestellt wird, ob, nachdem das Meßsystem vermeintlich entleert worden ist, dennoch Medium im Meßwandler verblieben ist oder nicht; eine Anwendung nämlichen Verfahrens auf durchströmte Meßsysteme ist jedoch deswegen nicht ohne weiteres möglich, weil ein Überschreiten des vorgenannten Grenzwerts auch allein auf ein signifikante Änderung von Mediumseigenschaften, wie etwa der Dichte und/oder der Viskosität, zurückzuführen sein kann. Auch die typischerweise in Meßsystemen der vorgenannten Art gemessene Phasenverschiebung zwischen den Vibrationssignalen ist kein verläßlicher Indikator für eine teilweise Verstopfung des Meßwandlers, weil das mindestens eine noch durchströmte Meßrohr weiterhin auch im Coriolismode schwingt und somit die mittels der Sensoranordnung erzeugten Vibrationssignale nach wie vor zueinander phasenverschoben sind. In der JP A 11264635 ist ein ferner ein Verfahren zum Erfassen des Verstopfens lediglich eines einzigen Kapillarrohrs mittels einer zwei Temperatursensoren aufweisenden Temperaturmeßanordnung beschrieben, wobei eine Temperaturdifferenz zwischen einer von einem einlaßseitigen Temperatursensor am Kapillarrohr erfaßten Temperatur und einer von einem auslaßseitigen Temperatursensor am Kapillarrohr erfaßten Temperatur mit einem einem verstopften Kapillarrohr entsprechenden Grenzwert verglichen wird.

Da es - zumindest bei Anwendungen etwa in der Pharma- oder auch der Lebensmittelindustrie nicht zuletzt auch aus hygienischen Gründen - jedoch durchaus wünschenswert ist, auch eine teilweise Verstopfung während des laufenden Meßbetriebs verläßlich und möglichst frühzeitig, etwa unmittelbar nach Entstehung, erkennen und entsprechend signalisieren zu können, besteht eine Aufgabe der Erfindung darin, ein Verfahren zur Überwachung einer wenigstens zwei im Betrieb parallel von Medium durchströmte Meßrohre aufweisenden Rohranordnung, insb. zur Erkennung einer Verstopfung auch nur eines der Meßrohre nämlicher Rohranordnung, sowie eine Meßanordnung dafür anzugeben.

Zur Lösung der Aufgabe besteht die Erfindung in einem Verfahren gemäss Anspruch 1.

Darüberhinaus besteht die Erfindung in einem Messsystem gemäss Anspruch 2.

Ein Grundgedanke der Erfindung besteht darin, den infolge von teilweiser Verstopfung von Rohranordnungen der in Rede stehenden Art zwischen dem verstopften, nicht mehr durchströmten und dem nicht verstopften, nach wie vor durchströmten Meßrohren regelmäßig auftretenden Wärmefluß bzw. den daraus resultierenden Temperaturgradienten als Indikatorgröße für die Überwachung der Rohranordnung zu verwenden. Die Erfindung basiert u.a. auf der Erkenntnis, daß zum einen in Anwendungen der industriellen Meß- und Automatisierungstechnik üblicherweise Medien mit einer signifikant von einer Umgebungstemperatur des Meßsystems abweichenden Mediumstemperatur zu messen sind, nicht zuletzt auch während der regelmäßig im eingebauten Zustand durchgeführten Reinigung solcher Rohranordnungen mittels heißem Wasser bzw. Dampf, und das zum anderen bei Rohranordnungen mit im ungestörten Betrieb parallel durchströmten Meßrohren, im Falle einer Verstopfung eines der Meßrohre schon nach vergleichsweise kurzer Zeit ein signifikanter, sehr einfach zu detektierender Temperaturunterschied zum anderen, nach wie vor durchströmten Meßrohr bzw. ein entsprechender Wärmefluß zwischen Meßrohren teilweiser verstopfter Rohranordnungen zu verzeichnen ist.

Die Erfindung sowie weitere vorteilhafte Ausgestaltungen und Zweckmäßigkeiten davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich.

Im einzelnen zeigen:

Fig. 1, 2 ein als Kompakt-Meßgerät ausgebildetes Meßsystem für in Rohrleitungen strömende Medien in verschiedenen Seitenansichten;

Fig. 3 schematisch nach Art eines Blockschaltbildes eine, insb. auch für ein Meßsystem gemäß den Fig. 1, 2 geeignete, Umformer-Elektronik mit daran angeschlossener, teilweise verstopfter Rohranordnung mit zwei im ungestörten Betrieb parallel durchströmten Meßrohren;

Fig. 4, 5 in, teilweise geschnittenen bzw. perspektivischen, Ansichten einen, insb. für ein Meßsystem gemäß den Fig. 1, 2 geeigneten, Meßwandler vom Vibrations-Typ.

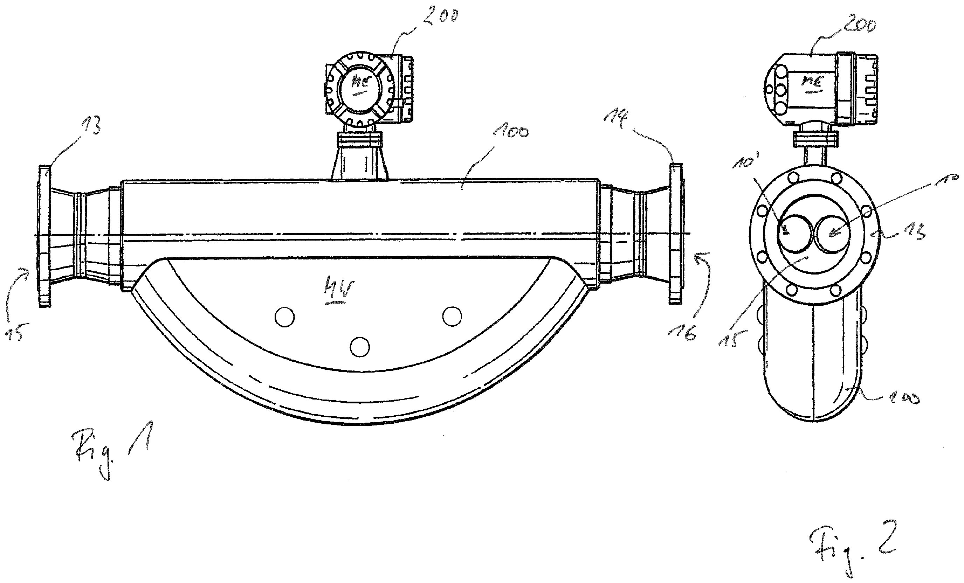

In den Fig. 1, 2 ist schematisch ein Ausführungsbeispiel für ein in eine - hier nicht dargestellte - Prozeßleitung, etwa eine Rohrleitung einer industriellen Anlage, einfügbares, beispielsweise als Coriolis-Massendurchflußmeßgerät, Dichtemeßgerät, Viskositätsmeßgerät oder dergleichen ausgebildetes, Meßsystem für fließfähige, insb. fluide, Medien, dargestellt, das im besonderen dem Messen und/oder Überwachen wenigstens eines physikalischen Parameters des Mediums, wie etwa einer Massendurchflußrate, einer Dichte, einer Viskosität oder dergleichen. Das - hier als In-line-Meßgerät in Kompaktbauweise realisierte - Meßsystem umfaßt dafür einen über ein Einlaßende #111 sowie ein Auslaßende #112 an die Prozeßleitung angeschlossenen, dem Erfassen des wenigstens einen Parameters und dessen Konvertierung dafür repräsentative Meßsignale dienenden Meßwandler MW, welcher Meßwandler im Betrieb entsprechend vom zu messenden Medium, wie etwa einer niedrigviskosen Flüssigkeit und/oder einer hochviskosen Paste, durchströmt und an eine mit dem Meßwandler elektrisch gekoppelte, dem Ansteuern des Meßwandlers und zum Auswerten von vom Meßwandler gelieferten Meßsignalen dienende Umformer-Elektronik ME des Meßsystems angeschlossen ist.

Zum Erfassen des wenigstens einen Parameters umfaßt der Meßwandler ein in einem Meßwandler-Gehäuse 100 angeordnetes und im Betrieb von der Umformer-Elektronik ME angesteuertes Innenteil, das die physikalisch-elektrische Konvertierung des wenigstens einen zu messenden Parameters bewirkt. Zum Führen des strömenden Mediums weist das Innenteil und insoweit der Meßwandler einen dem Aufteilen von einströmendem Medium in zwei Teilströmungen dienenden einlaßseitigen ersten Strömungsteiler $20_1$ mit wenigstens zwei voneinander beabstandeten Strömungsöffnungen $20_{1A}$, $20_{1B}$, einen dem Wiederzusammenführen der Teilströmungen dienenden auslaßseitigen zweiten Strömungsteiler $20_2$ mit wenigsten zwei voneinander beabstandeten Strömungsöffnungen $20_{2A}$, $20_{2B}$ sowie wenigstens zwei unter Bildung einer Rohranordnung mit zumindest zwei strömungstechnisch parallel geschalteten Strömungspfaden an die, insb. baugleichen, Strömungsteiler $20_1$, $20_2$ angeschlossene Meßrohre $18_1$, $18_2$ auf. Dabei münden ein erstes Meßrohr $18_1$ mit einem einlaßseitigen ersten Meßrohrende in eine erste Strömungsöffnung $20_{1A}$ des ersten Strömungsteilers $20_1$ und mit einem auslaßseitigen zweiten Meßrohrende in eine erste Strömungsöffnung $20_{2A}$ des zweiten Strömungsteilers $20_2$ und ein zweites Meßrohr $18_2$ mit einem einlaßseitigen ersten Meßrohrende in eine zweite Strömungsöffnung $20_{1B}$ des ersten Strömungsteilers $20_1$ und mit einem auslaßseitigen zweiten Meßrohrende in eine zweite Strömungsöffnung $20_{2B}$ des zweiten Strömungsteilers $20_2$, so daß also beide Meßrohre im ungestörten Betrieb des Meßsystem gleichzeitig und parallel von Medium durchströmt sind.

Im hier gezeigten Ausführungsbeispiel sind die Strömungsteiler insoweit integraler Bestandteil des Meßwandlergehäuses, als mittels des ersten Strömungsteilers ein das Einlaßende #111 des Meßwandlers definierendes einlaßseitige erstes Gehäuseende und mittels des zweiten Strömungsteilers ein das Auslaßende #112 des Meßwandlers definierendes auslaßseitige zweite Gehäuseende gebildet sind. Für den typischen Fall, daß der Meßwandler MW lösbaren mit der, beispielsweise als metallische Rohrleitung ausgebildeten, Prozeßleitung zu montieren ist, sind einlaßseitig des Meßwandlers einer erster Anschlußflansch 13 für den Anschluß an ein Medium dem Meßwandler zuführendes Leitungssegment der Prozeßleitung und auslaßseitig ein zweiter Anschlußflansch 14 für ein Medium vom Meßwandler abführendes Leitungssegment der Prozeßleitung vorgesehen. Die Anschlußflansche 13, 14 können dabei, wie bei Meßwandlern der beschriebenen Art durchaus üblich auch an das jeweilige Gehäuseende angeschweißt und insoweit endseitig in das Meßwandlergehäuse 100 integriert sein.

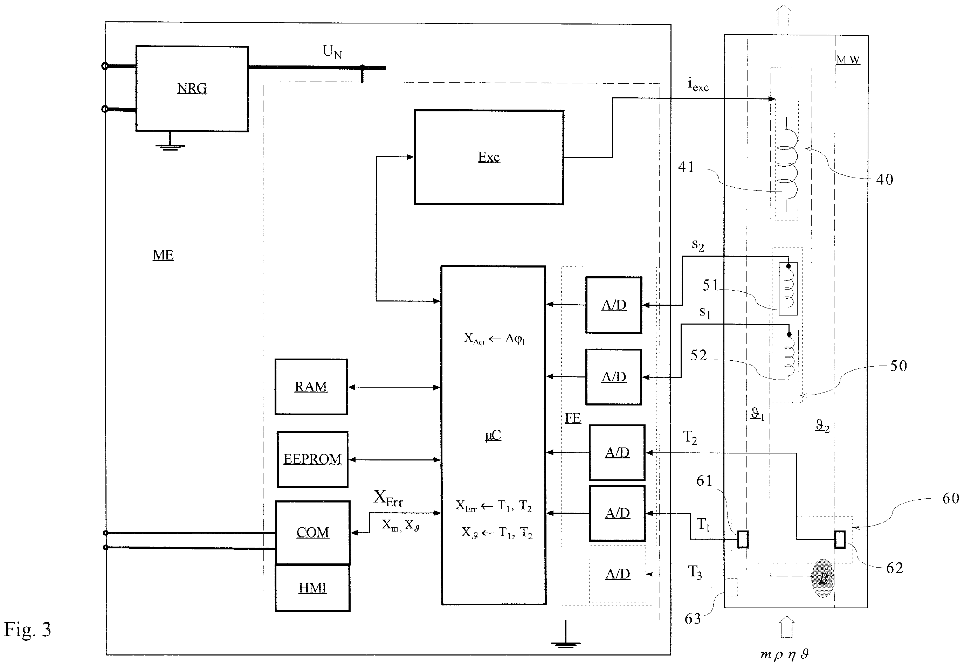

Die, insb. im Betrieb von extern via Anschlußkabel und/oder mittels interner Energiespeicher mit elektrischer Energie versorgte, Umformer-Elektronik wiederum weist, wie in Fig. 3 schematisch nach Art eines Blockschaltbildes dargestellt, eine dem Ansteuern des, beispielsweise als Meßwandler vom Vibrationstyp ausgebildeten, Meßwandlers dienende Treiber-Schaltung Exc sowie eine Meßsignale des Meßwandlers MW verarbeitende, beispielsweise mittels eines Mikrocomputers gebildete und/oder im Betrieb mit der Treiber-Schaltung Exc kommunizierende, Meß- und Auswerte-Schaltung $\mu$C des Meßsystems elektrisch angeschlossen ist, die im Betrieb die wenigstens eine Meßgröße, wie z.B. den momentanen oder einen totalisierten Massendurchfluß, repräsentierende Meßwerte liefert. Die Treiber-Schaltung Exc und die Auswerte-Schaltung $\mu$C sowie weitere, dem Betrieb des Meßsystems dienende Elektronik-Komponenten der Umformer-Elektronik, wie etwa interne Energieversorgungsschaltungen NRG zum Bereitstellen interner Versorgungsspannungen $U_N$ und/oder dem Anschluß an ein übergeordnetes Meßdatenverarbeitungssystem und/oder einem Feldbus dienenden Kommunikationsschaltungen COM, sind ferner in einem entsprechenden, insb. schlag- und/oder auch explosionsfest und/oder hermetisch dicht ausgebildeten, Elektronikgehäuse 200 untergebracht. Das Elektronikgehäuse 200 des In-line-Meßgeräts kann unter Bildung eines Meßgeräts in Kompaktbauweise beispielsweise direkt am Meßwandlergehäuse 100 gehaltert sein. Zum Visualisieren von Meßsystem intern erzeugten Meßwerten und/oder gegebenenfalls Meßsystem intern generierten Statusmeldungen, wie etwa eine Fehlermeldung oder einen Alarm, vor Ort kann das Meßsystem desweiteren ein zumindest zeitweise mit der Umformer-Elektronik kommunizierendes Anzeige- und Bedienelement HMI aufweisen, wie etwa ein im Elektronikgehäuse hinter einem darin entsprechend vorgesehenen Fenster plaziertes LCD-, OLED- oder TFT-Display sowie eine entsprechende Eingabetastatur und/oder ein Touchscreen. In vorteilhafter Weise kann die, insb. programmierbare und/oder fernparametrierbare, Umformer-Elektronik ME ferner so ausgelegt sein, daß sie im Betrieb des In-Line-Meßgeräts mit einem diesem übergeordneten elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem und/oder drahtlos per Funk, Meß- und/oder andere Betriebsdaten austauschen kann, wie etwa aktuelle Meßwerte oder der Steuerung des In-line-Meßgeräts dienende Einstell- und/oder Diagnosewerte. Dabei kann die Umformer-Elektronik ME beispielsweise eine solche interne Energieversorgungsschaltung NRG aufweisen, die im Betrieb von einer im Datenverarbeitungssystem vorgesehen externen Energieversorgung über das vorgenannte Feldbussystem gespeist wird. Gemäß einer Ausgestaltung der Erfindung ist die Umformer-Elektronik ferner so ausgebildet, daß sie mittels einer, beispielsweise als 4-20 mA-Stromschleife konfigurierten, Zweidraht-Verbindung 2L mit dem externer elektronischen Datenverarbeitungssystem elektrisch verbindbar ist und darüber mit elektrischer Energie versorgt werden sowie Meßwerte zum Datenverarbeitungssystem übertragen kann. Für den Fall, daß das Meßsystem für eine Ankopplung an ein Feldbus- oder ein anderes Kommunikationssystem vorgesehen ist, kann die Umformer-Elektronik ME eine entsprechende Kommunikations-Schnittstelle COM für eine Datenkommunikation gemäß einem der einschlägigen Industriestandards aufweisen. Das elektrische Anschließen des Meßwandlers an die erwähnte Umformer-Elektronik kann mittels entsprechender Anschlußleitungen erfolgen, die aus dem Elektronik-Gehäuse 200, beispielsweise via Kabeldurchführung, heraus geführt und zumindest abschnittsweise innerhalb des Meßwandlergehäuses verlegt sind. Die Anschlußleitungen können dabei zumindest anteilig als elektrische, zumindest abschnittsweise in von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, insb. flexiblen, gegebenenfalls lackierten Leiterplatte gebildet sein, vgl. hierzu auch die eingangs erwähnten US-B 67 11 958 oder US-A 53 49 872.

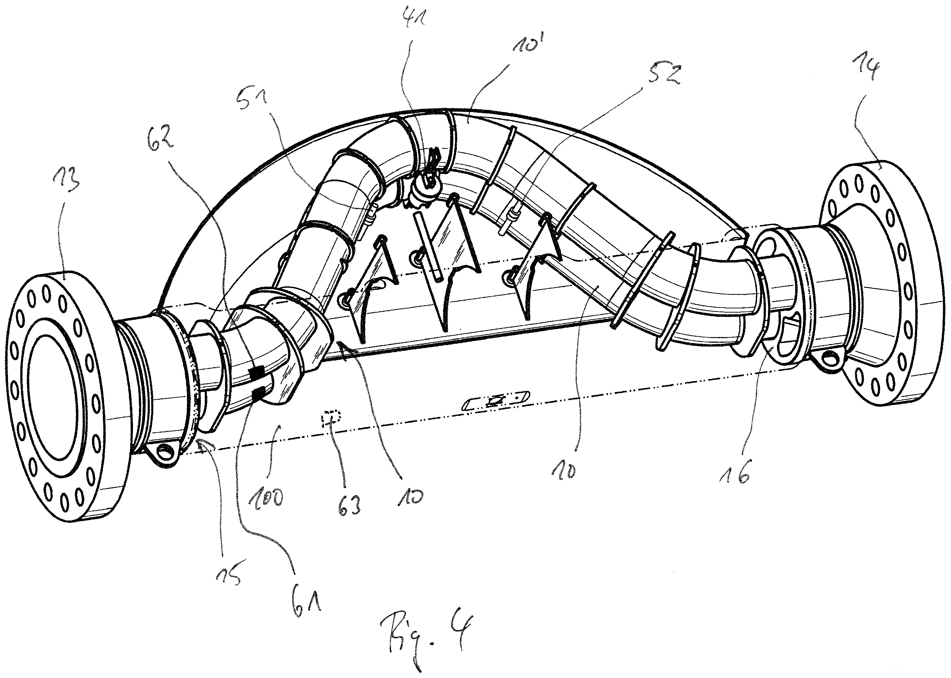

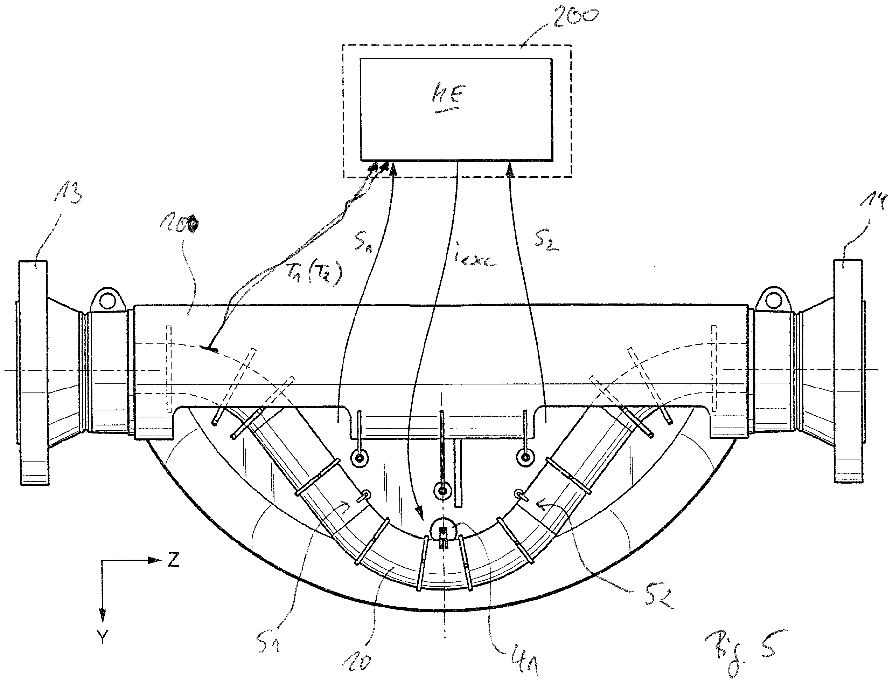

In den Fig. 4 und 5 ist ein Ausführungsbeispiel für einen für die Realisierung des Meßsystems geeigneten Meßwandler MW schematisch dargestellt. Der hier gezeigte Meßwandler MW ist als Meßwandler vom Vibrationstyp ausgebildet und dient generell dazu, in einem hindurchströmenden Medium, etwa einem Gas und/oder einer Flüssigkeit, mechanische Reaktionskräfte, z.B. massedurchflußabhängige Coriolis-Kräfte, dichteabhängige Trägheitskräfte und/oder viskositätsabhängige Reibungskräfte, zu erzeugen, die sensorisch erfaßbar und insoweit auch meßbar auf den Meßwandler zurückwirken. Abgeleitet von diesen Reaktionskräften können so z.B. eine Massedurchflußrate $m$, eine Dichte $\rho$ und/oder eine Viskosität $\eta$ des Mediums gemessen werden. Im in den Fig. 4 und 5 gezeigten Ausführungsbeispiel ist jedes der zwei, sich jeweils zwischen seinem einlaßseitigen ersten Meßrohrende 11# und seinem auslaßseitigen zweiten Meßrohrende 12# mit einer Schwinglänge erstreckenden Meßrohre 10, 10' zumindest abschnittsweise gekrümmt. Zum Erzeugen vorgenannter Reaktionskräfte wird jedes der zwei Meßrohre im Betrieb zumindest über seine Schwinglänge vibrieren gelassen - beispielsweise mit gleicher Schwingfrequenz wie das jeweils andere Meßrohr, jedoch dazu gegenphasig - und dabei, um eine statische Ruhelage oszillierend, wiederholt elastisch verformt. Die jeweilige Schwinglänge entspricht hierbei einer Länge einer innerhalb von Lumen verlaufende gedachte Mittel- oder auch Schwerelinie (gedachte Verbindungslinie durch die Schwerpunkte aller Querschnittsflächen des jeweiligen Meßrohrs), im Falle gekrümmter Meßrohr also einer gestreckten Länge des jeweiligen Meßrohrs 10 bzw. 10'. Nach einer weiteren Ausgestaltung der Erfindung wird jedes der Meßrohre im Betrieb so vibrieren gelassen, daß es um eine Schwingungsachse, insb. in einem Biegeschwingungsmode, schwingt, die zu einer die beiden jeweiligen Meßrohrenden 11#, 12# bzw. 11#', 12#' imaginär verbindenden gedachten Verbindungsachse parallel oder koinzident ist. Die, beispielsweise im Betrieb im wesentlichen gegenphasig zueinander oszillierenden, Meßrohre sind im hier gezeigten Ausführungsbeispiel unter Bildung einer ersten Kopplungszone einlaßseitig mittels eines, beispielsweise plattenförmigen, ersten Kopplerelements und unter Bildung einer zweiten Kopplungszone auslaßseitig mittels eines, beispielsweise plattenförmigen und/oder zum ersten Kopplerelement baugleichen, zweiten Kopplerelements miteinander mechanisch verbunden. Somit definieren hier also die erste Kopplungszone jeweils ein einlaßseitiges erstes Meßrohrende 11#, 11'# jedes der zwei Meßrohre 10, 10' und die zweite Kopplungszone jeweils ein auslaßseitiges zweites Meßrohrende 12#, 12'# des jeweiligen Meßrohrs 10 bzw. 10'. Jedes der Meßrohre ist ferner so geformt und im Meßwandler angeordnete, daß vorgenannte Verbindungsachse im wesentlichen parallel zu einer Ein- und Auslaßende des Meßwandlers imaginär verbindenden gedachten Längsachse L des Meßwandlers verläuft, ggf. auch koinzidiert. Jedes der, beispielsweise aus Edelstahl, Titan, Tantal bzw. Zirkonium oder einer Legierung davon hergestellten, Meßrohre des Meßwandlers und insoweit auch eine innerhalb von Lumen verlaufende gedachte Mittellinie des jeweiligen Meßrohrs kann z.B. im wesentlichen U-förmig oder, wie auch in der Fig. 4 und 5 gezeigt, im wesentlichen V-förmig ausgebildet sein. Wie aus der Zusammenschau der Fign. 4 und 5 ohne weiteres ersichtlich, ist jedes der wenigstens zwei Meßrohre 10 hier zudem jeweils so geformt, daß vorgenannte Mittellinie, wie bei Meßwandlern der in Rede stehenden Art durchaus üblich, in einer gedachten Rohrebene des Meßwandlers liegt. Da der Meßwandler für eine Vielzahl unterschiedlichster Anwendungen, insb. im Bereich der industriellen Meß- und Automatisierungstechnik einsetzbar sein soll, ist ferner vorgesehen, daß jedes der Meßrohre je nach Verwendung des Meßwandlers einen Durchmesser aufweist, der im Bereich zwischen etwa 1 mm und etwa 100 mm liegt. Es sei an dieser Stelle ferner darauf hingewiesen, daß - obwohl der Meßwandler im in den Fig. 4 und 5 gezeigten Ausführungsbeispiel zwei gekrümmte Meßrohre aufweist und zumindest insoweit in seinem mechanischen Aufbau wie auch seinem Wirkprinzip dem in den US-B 69 20 798 oder US-A 57 96 011 vorgeschlagenen bzw. auch den seitens der Anmelderin unter der Typbezeichnung *"PROMASS E"* oder *"PROMASS F"* käuflich angebotenen Meßwandlern ähnelt - die Erfindung selbstverständlich auch auf Meßwandler mit geraden und/oder mehr als zwei Meßrohren, beispielsweise also vier parallelen Meßrohren, Anwendung finden kann, etwa vergleichbar den in den eingangs erwähnten US-A 56 02 345 oder WO-A 96/08697 gezeigten oder beispielsweise auch den seitens der Anmelderin unter der Typbezeichnung *"PROMASS M"* käuflich angebotenen Meßwandlern.

Zum aktiven Anregen mechanischer Schwingungen der wenigstens zwei, insb. zueinander parallelen und/oder hinsichtlich Form und Material baugleichen, Meßrohre, insb. auf einer oder mehreren von deren, von der Dichte des darin momentan jeweils geführten Mediums abhängigen natürlichen Eigenfrequenzen, ist Meßwandler ferner eine elektromechanische, insb. elektrodynamische, also mittels Tauchankerspulen gebildete, Erregeranordnung 40 vorgesehen. Diese dient - angesteuert von einem von der Treiber-Schaltung der Umformer-Elektronik gelieferten und, gegebenenfalls im Zusammenspiel mit der Meß- und Auswerte-Schaltung, entsprechend konditionierten Erregersignal, z.B. mit einem geregelten Strom und/oder einer geregelten Spannung -jeweils dazu, mittels der Treiber-Schaltung eingespeiste elektrische Erregerenergie bzw. -leistung $E_{exc}$ in eine auf die wenigstens zwei Meßrohre, z.B. pulsförmig oder harmonisch, einwirkende und diese in der vorbeschriebenen Weise auslenkende Erregerkraft $F_{exc}$ umzuwandeln. Die Erregerkraft $F_{exc}$ kann, wie bei derartigen Meßwandlern üblich, bidirektional oder unidirektional ausgebildet sein und in der dem Fachmann bekannten Weise z.B. mittels einer Strom- und/oder Spannungs-Regelschaltung, hinsichtlich ihrer Amplitude eingestellt und, z.B. mittels einer Phasen-Regelschleife (PLL), hinsichtlich ihrer Frequenz auf eine momentane mechanische Eigenfrequenz der Rohranordnung abgestimmt werden. Der Aufbau und die Verwendung solcher dem Abgleichen einer Erregerfrequenz, $f_{exc}$, des Erregersignals auf die momentane Eigenfrequenz des gewünschten Nutzmodes dienenden Phasenregel-Schleifen ist z.B. in der US-A 48 01 897 ausführlich beschrieben. Selbstverständlich können auch andere für das Einstellen der Erregerenergie $E_{exc}$ geeignete, dem Fachmann an und für sich bekannte Treiberschaltungen verwendet werden, beispielsweise auch gemäß den eingangs erwähnten US-A 48 79 911, US-A 50 09 109, US-A 50 50 439, oder US-B 63 11 136. Ferner sei hinsichtlich einer Verwendung solcher Treiberschaltungen für Meßwandler vom Vibrationstyp auf die mit Meßumformern der Serie *"PROMASS 83"* bereitgestellte Umformer-Elektroniken verwiesen, wie sie von der Anmelderin beispielsweise in Verbindung mit Meßwandlern der Serie *"PROMASS E"*, *"PROMASS F"*, *"PROMASS M"* angeboten werden. Deren Treiberschaltung ist beispielsweise jeweils so ausgeführt, daß die lateralen Biegeschwingungen im Nutzmode auf eine konstante, also auch von der Dichte, $\rho$, weitgehend unabhängige Amplitude geregelt werden.

Nach einer weiteren Ausgestaltung der Erfindung sind die wenigstens zwei Meßrohre 10 im Betrieb mittels der Erregeranordnung zumindest zeitweise in einem Nutzmode aktiv angeregt, in dem sie, insb. überwiegend oder ausschließlich, Biegeschwingungen um die erwähnte gedachte Schwingungsachse ausführen, beispielsweise überwiegend mit genau einer natürlichen Eigenfrequenz (Resonanzfrequenz) der Rohranordnung, wie etwa jener, die einem Biegeschwingungsgrundmode entspricht, in dem jedes der Meßrohre genau einen Schwingungsbauch aufweist. Im besonderen ist hierbei ferner vorgesehen, daß jedes der Meßrohre, wie bei derartigen Meßwandlern mit gekrümmten Meßrohren durchaus üblich, mittels der Erregeranordnung zu Biegeschwingungen bei einer Erregerfrequenz $f_{exc}$, so angeregt ist, daß es sich im Nutzmode, um die erwähnte gedachte Schwingungsachse - etwa nach Art eines einseitig eingespannten Auslegers - oszillierend, zumindest anteilig gemäß einer seiner natürlichen Biegeschwingungsformen ausbiegt. Die mittels der Erregeranordnung aktiv angeregten Biegeschwingungen der Meßrohren weisen dabei jeweils im Bereich der das jeweilige einlaßseitige Meßrohrende definierenden einlaßseitigen Kopplungszone einen einlaßseitigen Schwingungsknoten und im Bereich der das jeweilige auslaßseitige Meßrohrende definierenden auslaßseitigen Kopplungszone einen auslaßseitigen Schwingungsknoten auf, so daß also sich das jeweilige Meßrohr mit seiner Schwinglänge zwischen diesen beiden Schwingungsknoten im wesentlichen frei schwingend erstreckt. Wie bei Meßwandlern mit einer Rohranordnung der in Rede stehenden Art üblich, sind die Meßrohre mittels der, beispielsweise differentiell zwischen beiden Meßrohren wirkenden, Erregeranordnung dabei insb. so angeregt, daß sie im Betrieb zumindest zeitweise und zumindest anteilig gegengleiche Biegeschwingungen um die Längsachse L ausführen. Anders gesagt, die beiden Meßrohre 10, 10' bewegen sich dann jeweils nach der Art von gegeneinander schwingenden Stimmgabelzinken. Für diesen Fall ist gemäß einer weiteren Ausgestaltung der Erfindung die Erregeranordnung dafür ausgelegt, gegengleiche Vibrationen des ersten Meßrohrs und des zweiten Meßrohrs, insb. Biegeschwingungen jedes der Meßrohre um eine das jeweilige erste Meßrohrende und das jeweilige zweite Meßrohrende imaginär verbindende gedachte Schwingungsachse, anzuregen bzw. aufrechtzuerhalten. Als Erregeranordnung 40 kann hierbei z.B. eine in konventioneller Weise mittels eines - beispielsweise einzigen - mittig, also im Bereich einer halben Schwinglänge, zwischen den wenigstens zwei Meßrohr plazierten und differentiell auf die Meßrohre wirkenden elektrodynamischen Schwingungserregers 41 gebildete Erregeranordnung 40 dienen. Der Schwingungserreger 41 kann, wie in der Fig. 4 angedeutet, beispielsweise mittels einer am ersten Meßrohr befestigten zylindrischen Erregerspule, die im Betrieb von einem entsprechenden Erregerstrom durchflossen und damit einhergehend von einem entsprechenden Magnetfeld durchflutet ist, sowie einem in die Erregerspule zumindest teilweise eintauchenden dauermagnetischen Anker, der von außen, insb. mittig, am zweiten Meßrohr fixiert ist, gebildet sein. Weitere - durchaus auch für das erfindungsgemäße Meßsystem geeignete - Erregeranordnungen für Schwingungen der wenigstens zwei Meßrohrs sind z.B. in den eingangs erwähnten US-A 46 80 974, US-A 47 38 144, US-A 47 68 384, US-A 48 01 897, US-A 48 23 614, US-A 48 79 911, US-A 50 09 109, US-A 50 50 439, der US-A 53 59 881, US-A 56 02 345, US-A 57 34 112, US-A 57 96 011, US-A 59 26 096, US-A 59 69 264, US-B 71 27 952, US-A 60 92 429, US-A 63 111 36, US-B 68 83 387, US-B 73 25 461, US-B 73 92 709, oder US-B 74 21 350 gezeigt.

Zum Vibrierenlassen der wenigsten zwei Meßrohre des Meßwandlers wird die Erregeranordnung 40, wie bereits erwähnt, mittels eines gleichfalls oszillierenden Erregersignals von einstellbarer Erregerfrequenz, $f_{exc}$, gespeist, so daß die Erregerspule des - hier einzigen am Meßrohr 10 angreifenden Schwingungserregers - im Betrieb von einem in seiner Amplitude entsprechend geregelten Erregerstrom $i_{exc}$ durchflossen ist, wodurch ein zum Bewegen der Meßrohre erforderliches Magnetfeld erzeugt wird. Das Treiber- oder auch Erregersignal bzw. dessen Erregerstrom $i_{exc}$ kann z.B. harmonisch, mehrfrequent oder auch rechteckförmig sein. Die Erregerfrequenz, $f_{exc}$, des zum Aufrechterhalten der aktiv angeregten Vibrationen der Meßrohre erforderlichen Erregerstrom kann beim im Ausführungsbeispiel gezeigten Meßwandler in vorteilhafter Weise so gewählt und eingestellt sein, daß das die Meßrohre, wie bereits erwähnt, überwiegend in einem Biegeschwingungsgrundmode mit einem einzigen Schwingungsbauch oszillieren. Demnach ist nach einer weiteren Ausgestaltung der Erfindung die Erreger- oder auch Nutzmodefrequenz, $f_{exc}$, so eingestellt, daß sie möglichst genau einer momentanen Eigenfrequenz von Biegeschwingungen wenigstens eines der Meßrohre 10, insb. der eines Biegeschwingungsgrundmodes, entspricht. Für den betriebsmäßig vorgesehenen Fall, daß das Medium in der Prozeßleitung strömt und somit der Massendurchfluß m in der Rohranordnung von Null verschieden ist, werden mittels der in oben beschriebener Weise vibrierenden Meßrohre im hindurchströmenden Medium auch Corioliskräfte induziert. Diese wiederum wirken auf das jeweils durchströmte Meßrohr zurück und bewirken so eine zusätzliche, sensorisch erfaßbare Verformung derselben, und zwar im wesentlichen gemäß einer weiteren natürlichen Eigenschwingungsform von höherer modaler Ordnung als der Nutzmode. Eine momentane Ausprägung dieses sogenannten, dem angeregten Nutzmode gleichfrequent überlagerten Coriolismodes ist dabei, insb. hinsichtlich ihrer Amplituden, auch vom momentanen Massedurchfluß m abhängig. Als Coriolismode kann, wie bei Meßwandlern mit gekrümmten Meßrohren üblich, z.B. die Eigenschwingungsform des antisymmetrischen Twistmodes dienen, also jene, bei der das jeweils durchströmte Meßrohr, wie bereits erwähnt, auch Drehschwingungen um eine senkrecht zur Biegschwingungsachse ausgerichteten gedachten Drehschwingungsachse ausführt, die die Mittelinie des jeweiligen Meßrohrs im Bereich der halben Schwingungslänge imaginär schneidet.

Zum Erfassen von Vibrationen der Meßrohre, insb. auch Schwingungen im Coriolismode, weist der Meßwandler ferner eine entsprechende Sensoranordnung 50 auf. Diese umfaßt, wie auch in den Fig. 4 und 5 schematische dargestellt, wenigstens einen, beispielsweise elektrodynamischen und/oder vom wenigstens einen Schwingungserreger beabstandet zwischen den wenigstens zwei Meßrohren 10 angeordneten, ersten Schwingungssensor 51, der ein Vibrationen wenigstens eines der zwei Meßrohre, beispielsweise auch gegengleiche Vibrationen der wenigstens zwei Meßrohre, repräsentierendes erstes Vibrationsmeßsignal $s_1$ des Meßwandlers liefert, beispielsweise einer mit den Schwingungen korrespondierende Spannung oder einen mit den Schwingungen korrespondierenden Strom. Ferner ist gemäß einer Weiterbildung der Erfindung vorgesehen, daß die Sensoranordnung zumindest einen, beispielsweise vom ersten Schwingungssensor 52 beabstandet zwischen den wenigstens zwei Meßrohren 10 angeordneten und/oder elektrodynamischen, zweiten Schwingungssensor 52 aufweist, der ein Vibrationen wenigstens eines der zwei Meßrohre, beispielsweise auch gegengleiche Vibrationen der wenigstens zwei Meßrohre, repräsentierendes zweites Vibrationsmeßsignal $s_2$ des Meßwandlers liefert. Die Schwingungssensoren der Sensoranordnung können in vorteilhafter Weise zudem so ausgebildet sein, daß sie Vibrationsmeßsignal gleichen Typs liefern, beispielsweise jeweils eine Signalspannung bzw. einen Signalstrom. Im hier gezeigten Ausführungsbeispiel sind der erste Schwingungssensor 51 einlaßseitig und der zweite Schwingungssensor 52 auslaßseitig zwischen den wenigstens zwei Meßrohren 10 angeordnet, insb. vom wenigstens einen Schwingungserreger bzw. von der Mitte des Meßrohrs 10 gleichweit beabstandet wie der erste Schwingungssensor bzw. derart, daß gegengleiche Vibrationen der beiden Meßrohre differentiell erfaßt sind. Die Schwingungssensoren der Sensoranordnung können beispielsweise aber auch so ausgebildet und im Meßwandler angeordnet sein, daß sie, wie u.a. auch in der US-A 56 02 345 vorgeschlagen, die Schwingungen relativ zum Meßwandlergehäuse erfassen.

Jedes der - typischerweise breitbandigen - Vibrationssignale $s_1$, $s_2$ des Meßwandlers MW weist dabei jeweils eine mit dem Nutzmode korrespondierende Signalkomponente mit einer der momentanen Schwingfrequenz, $f_{exc}$, der im aktiv angeregten Nutzmode schwingenden Meßrohre entsprechenden Signalfrequenz und einer vom aktuellen Massendurchfluß des in der Rohranordnung strömenden Medium abhängigen Phasenverschiebung relativ zu dem, beispielsweise mittels PLL-Schaltung in Abhängigkeit von einer zwischen wenigstens einem der Vibrationssignale $s_1$, $s_2$ und dem Erregerstrom in der Erregeranordnung existierenden Phasendifferenz generierten, Erregersignal $i_{exc}$ auf. Selbst im Falle der Verwendung eines eher breitbandigen Erregersignals $i_{exc}$ kann infolge der zumeist sehr hohen Schwingungsgüte des Meßwandlers MW davon ausgegangen werden, daß die mit dem Nutzmode korrespondierende Signalkomponente jedes der Vibrationssignale andere, insb. mit allfälligen externen Störungen korrespondierende und/oder als Rauschen einzustufende, Signalkomponenten überwiegt und insoweit auch zumindest innerhalb eines einer Bandbreite des Nutzmodes entsprechenden Frequenzbereichs dominierend ist.

Die vom Meßwandler gelieferten Vibrationsmeßsignale $s_1$, $s_2$, die jeweils eine Signalkomponente mit einer momentanen Schwingfrequenz, $f_{exc}$, der im aktiv angeregten Nutzmode schwingenden wenigstens zwei Meßrohre entsprechende Signalfrequenz aufweisen, sind, wie auch in Fig. 3 gezeigt, der Umformer-Elektronik ME und daselbst dann der darin vorgesehenen Meß- und Auswerteschaltung µC zugeführt, wo sie mittels einer entsprechenden Eingangsschaltung FE zunächst vorverarbeitet, insb. vorverstärkt, gefiltert und digitalisiert werden, um anschließend geeignet ausgewertet werden zu können. Als Eingangsschaltung FE wie auch als Meß- und Auswerteschaltung µC können hierbei in herkömmlichen Coriolis-Massedurchfluß-Meßgeräten zwecks Konvertierung der Vibrationssignale verwendete bzw. Ermittlung von Massendurchflußraten und/oder totalisierten Massendurchflüssen etc. bereits eingesetzte und etablierte Schaltungstechnologien angewendet werden, beispielsweise auch solche gemäß den eingangs erwähnten Stand der Technik. Nach einer weiteren Ausgestaltung der Erfindung ist die Meß- und Auswerteschaltung µC dementsprechend auch mittels eines in der Umformer-Elektronik ME vorgesehenen, beispielsweise mittels eines digitalen Signalprozessors (DSP) realisierten, Mikrocomputers und mittels in diesen entsprechend implementierter und darin ablaufender Programm-Codes realisiert. Die Programm-Codes können z.B. in einem nicht-flüchtigen Datenspeicher EEPROM des Mikrocomputers persistent gespeichert sein und beim Starten desselben in einen, z.B. im Mikrocomputer integrierten, flüchtigen Datenspeicher RAM geladen werden. Für derartige Anwendungen geeignete Prozessoren sind z.B. solche vom Typ TMS320VC33, wie sie von der Firma Texas Instruments Inc. am Markt angeboten werden. Es versteht sich dabei praktisch von selbst, daß die Vibrationssignale $s_1$, $s_2$ wie bereits angedeutet, für eine Verarbeitung im Mikrocomputer mittels entsprechender Analog-zu-digital-Wandler A/D der Umformer-Elektronik ME in entsprechende Digitalsignale umzuwandeln sind, vgl. hierzu beispielsweise die eingangs erwähnten US-B 63 11 136 oder US-A 60 73 495 oder auch vorgenannten Meßumformer der Serie "PROMASS 83".

Die Umformer-Elektronik ME bzw. die darin enthaltene Meß- und Auswerteschaltung µC dient dabei gemäß einer weiteren Ausgestaltung der Erfindung dazu, unter Verwendung der von der Sensoranordnung 50 gelieferten Vibrationsmeßsignale $s_1$, $s_2$, beispielsweise anhand einer zwischen den bei anteilig in Nutz- und Coriolismode schwingendem Meßrohr 10 generierten Vibrationssignalen $s_1$, $s_2$ des ersten und zweiten Schwingungssensors 51, 52 detektierten Phasendifferenz, wiederkehrend einen Massendurchfluß-Meßwert $X_m$ zu ermitteln, der eine Massendurchflußrate des im Meßwandler strömenden Mediums repräsentiert. Dafür erzeugt die Umformer-Elektronik gemäß einer weiteren Ausgestaltung der Erfindung im Betrieb wiederkehrend einen Phasendifferenz-Meßwert $X_{\Delta\varphi}$, der die zwischen dem ersten Vibrationssignal $s_1$ und dem zweiten Vibrationssignal $s_2$ existierenden Phasendifferenz, $\Delta\varphi$, momentan repräsentiert. Alternativ oder in Ergänzung zur Ermittlung des Massendurchfluß-Meßwert $X_m$ kann die Umformer-Elektronik ME des Meßsystems auch dazu dienen, abgeleitet von einer anhand der Vibrationsmeßsignale oder des Errgersignals ermittelten momentanen Schwingungsfrequenz, insb. der des aktiv angeregten Nutzmodes, einen Dichte-Meßwert zu erzeugen, der eine Dichte des im Meßwandler strömenden Mediums repräsentiert. Ferner kann die Umformer-Elektronik ME wie bei In-Line-Meßgeräten der in Rede stehenden Art durchaus üblich ggf. auch dazu verwendet werden, einen eine Viskosität des im Meßwandler strömenden Mediums repräsentierenden Viskositäts-Meßwert $X_\eta$ zu ermitteln, vgl. hierzu auch die eingangs erwähnten US-B 72 84 449, US-B 70 17 424, US-B 69 10 366, US-B 68 40 109, der US-A 55 76 500 oder US-B 66 51 513. Zur Ermittlung der zum Bestimmen der Viskosität erforderlichen Erregerenergie oder Erregerleistung bzw. Dämpfung eignet sich dabei beispielsweise das von Treiberschaltung der Umformer-Elektronik gelieferte Erregersignal, insb. eine Amplitude und Frequenz von dessen den Nutzmode treibender Stromanteil oder auch eine Amplitude des gesamten, ggf. auch auf eine anhand wenigstens eines der Vibrationssignale ermittelte Schwingungsamplitude normierten Erregerstroms. Alternativ oder in Ergänzung dazu kann aber auch ein dem Einstellen des Treibersignals bzw. des Erregerstroms dienendes internes Steuersignal oder, beispielsweise im Falle einer Anregung der Vibrationen des wenigstens einen Meßrohrs mit einem Erregerstrom von fest vorgegebener bzw. auf konstant geregelter Amplitude, auch wenigstens eines der Vibrationssignale, insb. eine Amplitude davon, als ein Maß der für die Ermittlung des Viskositäts-Meßwerts erforderlichen Erregerenergie oder Erregerleistung bzw. Dämpfung dienen.

Wie bereits mehrfach erwähnt besteht bei Rohranordnungen der in Rede stehenden Art, also mit mindestens zwei parallel geschalteten Strömungspfaden ein erhöhtes Risiko einer unerkannten, ggf. auch schlagartigen, teilweisen Verstopfung $B$, beispielsweise infolge von festgeklemmten Festkörpern in einem der Meßrohre. Beim erfindungsgemäßen Meßsystem dient die Umformer-Elektronik ME daher im besonderen dazu, die Rohranordnung mittels vom Meßwandler gelieferten Meßsignalen, insb. auch bei durch die Rohranordnung strömendem Medium, auf allfällige teilweise Verstopfung B zu überwachen, insb. basierend darauf, daß eine zwischen dem ersten Meßrohr und dem zweiten Meßrohr existierenden Temperaturdifferenz ermittelt, und eine - in Fig. 3 exemplarisch im Einlaufbereich des zweiten Meßrohrs plazierte - teilweisen Verstopfung der Rohranordnung entsprechend signalisiert werden, falls die ermittelte Temperaturdifferenz von einem vorgegebenen, eine nicht verstopfte Rohranordnung repräsentierenden Grenzwert für die Temperaturdifferenz abweicht. Dafür weist der Meßwandler des erfindungsgemäßen Meßsystems ferner eine an die Umformer-Elektronik angeschlossene Temperaturmeßanordnung mit einem ersten Temperatursensor zum Erzeugen eines von einer Temperatur $\vartheta_1$ des ersten Meßrohrs abhängigen Temperatursignals $T_1$ und wenigstens einem, beispielsweise zum ersten Temperatursensor 61 baugleichen, zweiten Temperatursensor 62 zum Erzeugen eines von einer Temperatur $\vartheta_2$ des zweiten Meßrohrs abhängigen Temperatursignals $T_2$ auf. Jeder der, insb. baugleichen, Temperatursensoren kann beispielsweise als Widerstandsthermometer oder auch als Thermoelement ausgebildet. Anhand der von der Temperaturmeßanordnung gelieferten wenigstens zwei Temperaturmeßsignale ermittelt die Umformer-Elektronik, ob die Rohranordnung teilweise verstopft ist, beispielsweise durch gegenseitigen Vergleich beider Temperatursignale daraufhin, ob und inwieweit diese infolge der Verstopfung B eines der Meßrohre voneinander abweichen, und/oder durch Vergleich jedes der beiden Temperatursignale, ob oder inwieweit eines der beiden infolge Verstopfung B von einer vorgegeben oder im Betrieb gemessenen Referenztemperatur abweicht.

Unter Verwendung des mittels des ersten Temperatursensors erzeugten Temperatursignals und des mittels des zweiten Temperatursensors erzeugten Temperatursignals kann die Umformer-Elektronik schließlich einen eine teilweise Verstopfung der Rohranordnung signalisierenden, z.B. durch das erwähnte Anzeige- und Bedienelement HMI vor Ort zur Anzeige und/oder von einem mittels des Meßsystems gesteuerten Signalhorns zu Gehör gebrachten, Alarm $X_{Err}$ auslösen, zumindest dann - insoweit also zeitweise -, wenn ein diesem Zustand entsprechendes Kriterium von den Temperatursignalen erfüllt ist. Daher ist gemäß einer weiteren Ausgestaltung der Erfindung vorgesehen, daß die Umformer-Elektronik unter Verwendung des mittels des ersten Temperatursensors erzeugten Temperatursignals und des mittels des zweiten Temperatursensors erzeugten Temperatursignals vorgenannten Alarm $X_{Err}$ generiert, falls das mittels des ersten Temperatursensors erzeugte Temperatursignal und das mittels des zweiten Temperatursensors erzeugte Temperatursignal hinsichtlich wenigstens eines davon jeweils abgeleiteten Signalparameters, wie z.B. einem zeitlichen Mittelwert einer Signalamplitude jedes der beiden Temperatursignale, einer Streuung einer Signalamplitude jedes der beiden Temperatursignale, einer Kreuzkorrelation der beiden Temperatursignale oder dergleichen, über ein dafür entsprechend vorgegebenen Grenzwert hinausgehend voneinander abweichen. Alternativ oder in Ergänzung kann die Umformer-Elektronik aber auch unter Verwendung eines mittels des vom ersten Temperatursensors erzeugten Temperatursignals und mittels des vom zweiten Temperatursensors erzeugten Temperatursignals gebildetes Temperatur-Differenzsignal, das eine zwischen dem ersten Meßrohr und dem zweiten Meßrohr existierenden Temperaturdifferenz repräsentiert, den vorgenannten, teilweise Verstopfung der Rohranordnung signalisierenden, Alarm $X_{Err}$ generieren, falls die vom Temperatur-Differenzsignal repräsentierte Temperaturdifferenz von einem dafür vorgegebenen, eine nicht verstopfte Rohranordnung repräsentierenden Grenzwert abweicht. Der für die Generierung des Alarms $X_{Err}$ jeweils benötigte Grenzwert kann beispielsweise durch , ungestörte bzw. teilweise verstopfte Rohranordnung simulierende Experimente, die vorab an dem jeweiligen, entsprechend präparierten Meßwandler oder einer diesem entsprechenden oder zumindest vergleichbaren Rohranordnungen mit entsprechender Temperaturmeßanordnung durchgeführt sind, ermittelt und in der zugehörigen Umformer-Elektronik entsprechend abgespeichert werden. Für den Fall, daß die Rohranordnung mittels genau zwei parallel durchströmten Meßrohren gebildet ist, kann die Umformer-Elektronik bzw. der Grenzwert in vorteilhafter Weise so ausgebildet sein, daß der damit generierte Alarm $X_{Err}$ die Verstopfung lediglich eines der beiden Meßrohre signalisiert bzw. daß der damit generierte Alarm $X_{Err}$ signalisiert, daß durch eines der zwei Meßrohre - im in Fig. 3 gezeigtem Beispiel dem ersten Meßrohr - Medium strömt, während im anderen der zwei Meßrohre - im in der Fig. 3 gezeigten Beispiels also dem zweiten Meßrohr - nicht mehr strömt. Für den anderen erwähnten Fall, daß die Rohranordnung mittels mehr als zwei - beispielsweise vier - parallel durchströmten Meßrohren gebildet ist, kann die Umformer-Elektronik in vorteilhafter Weise so ausgebildet sein, daß der Alarm $X_{Err}$ signalisiert, daß wenigstens eines der Meßrohre infolge Verstopfung nicht mehr von Medium durchströmt ist, das Medium jedoch nach wie vor durch wenigstens eines der Meßrohre strömt.

Gemäß einer weiteren Ausgestaltung der Erfindung sind die Temperatursensoren für die Überwachung der Rohranordnung so im Meßwandler plaziert bzw. ist die damit bereitgestellte Temperaturmeßanordnung so ausgebildet, daß das mittels des ersten Temperatursensors erzeugte Temperatursignal überwiegend von der Temperatur des ersten Meßrohrs und das mittels des zweiten Temperatursensors erzeugte Temperatursignal überwiegend von der Temperatur des zweiten Meßrohrs abhängig sind und/der daß der erste Temperatursensor etwa gleich schnell mit einer Änderung von dessen Temperatursignal auf eine Änderung der Temperatur des ersten Meßrohrs reagiert wie der der zweite Temperatursensor mit einer Änderung von dessen Temperatursignal auf eine Änderung der Temperatur des zweiten Meßrohrs. Gemäß einer weiteren Ausgestaltung der Erfindung sind der erste Temperatursensor und der zweite Temperatursensor ferner so ausgebildet und im Meßwandler plaziert, daß das mittels des ersten Temperatursensors erzeugte Temperatursignal mehr mit der Temperatur bzw. dem zeitlichen Temperaturverlauf des ersten Meßrohrs korreliert ist als das mittels des zweiten Temperatursensors erzeugte Temperatursignal bzw. daß das mittels des zweiten Temperatursensors erzeugte Temperatursignal mehr mit der Temperatur bzw. dem zeitlichen Temperaturverlauf des zweiten Meßrohrs korreliert ist als das mittels des ersten Temperatursensors erzeugte Temperatursignal.

Zwecks Erzeugens möglichst schnell auf allfällige teilweise Verstopfung der Rohranordnung reagierender bzw. möglichst stark mit den jeweils erfaßten Meßrohrtemperaturen korrelierten Temperatursignale kann es ferner durchaus auch von Vorteil sein, den ersten Temperatursensor, wie auch in Fig. 3 schematisch dargestellt, direkt am ersten Meßrohr und den zweite Temperatursensor direkt am zweiten Meßrohr zu fixieren, etwa jeweils mittels thermisch gut leitender Löt- oder Klebverbindung. Zur Minimierung des für die Realisierung des erfindungsgemäßen Meßsystems erforderlichen Montage- und Verdrahtungsaufwandes ist gemäß einer Ausgestaltung der Erfindung ferner vorgesehen, daß außer dem ersten Temperatursensor kein weiterer Temperatursensor am ersten Meßrohr fixiert ist bzw., daß - alternativ oder in Ergänzung - außer dem zweiten Temperatursensor kein weiterer Temperatursensor am zweiten Meßrohr fixiert ist; falls - etwa aus Gründen der Erhöhung der Zuverlässigkeit der Detektion der teilweisen Verstopfung der Rohranordnung oder zwecks Schaffung von Redundanz - erforderlich kann die Temperaturmeßanordnung aber auch mittels jeweils zwei oder mehr voneinander beabstandeten Temperatursensoren auf jedem der Meßrohre gebildet sein. Zwecks einer weiteren Vereinfachung des Montage- bzw. des Verdrahtungsaufwandes kann es ferner durchaus auch von Vorteil sein, jeden der beiden Temperatursensoren, wie auch in Fig. 3 schematisch dargestellt, jeweils im Bereich der ersten Kopplungszone #11 zu plazieren. Alternativ dazu kann wenigstens einer der Temperatursensoren aber auch an einem der beiden Strömungsteiler fixiert sein. Beispielsweise kann der erste Temperatursensor am ersten Strömungsteiler fixiert sein, etwa näher hin zu dessen erster Strömungsöffnung als zur zweiten Strömungsöffnung nämlichen Strömungsteilers, und/oder kann der zweite Temperatursensor am zweiten Strömungsteiler fixiert sein, etwa näher hin zu dessen zweiter Strömungsöffnung als zur ersten Strömungsöffnung nämlichen Strömungsteilers. Zur Verbesserung der Genauigkeit bzw. Aussagefähigkeit der mittels der Umformer-Elektronik realisierten Überwachung der Rohranordnung, insb. auch zur Vermeidung eines Fehlalarms bzw. zur Validierung der von der Temperaturmeßanordnung gelieferten Temperaturmeßsignale, weist die Temperaturmeßanordnung gemäß einer weiteren Ausgestaltung der Erfindung wenigstens einen, beispielsweise direkt am Meßwandler-Gehäuse fixierten und/oder wiederum als Widerstandsthermometer ausgebildeten, dritten Temperatursensor 63 zum Erzeugen eines von einer, beispielsweise als eine Referenztemperatur für die mittels der Umformer-Elektronik realisierte Überwachung dienenden, Temperatur $\vartheta_3$ des Meßwandler-Gehäuse abhängigen Temperatursignals $T_3$ auf. Unter Verwendung des vom ersten Temperatursensors erzeugten Temperatursignals sowie des vom dritten Temperatursensor erzeugten Temperatursignals kann die Umformer-Elektronik beispielsweise eine Meldung generieren, die signalisiert, daß die von der Temperaturmeßanordnung gelieferten Temperatursignale zur Überwachung der Rohranordnung auf teilweise Verstopfung insoweit geeignet sind, als eine Temperatur des Mediums im Meßwandler von einer Temperatur des Meßwandler-Gehäuses abweicht, etwa für den Fall, daß eine anhand der Temperatursignale ermittelte Temperaturdifferenz zwischen Meßwandler-Gehäuse und Medium zumindest für einen vorgegebenen Zeitraum von mehr als 5 min im zeitlichen Mittel mehr als 5 Kelvin beträgt. Alternativ oder in Ergänzung kann die Umformer-Elektronik unter Verwendung des vom ersten Temperatursensors erzeugten Temperatursignals sowie des vom dritten Temperatursensor erzeugten Temperatursignals aber auch eine Meldung generieren, die signalisiert, daß die von der Temperaturmeßanordnung gelieferten Temperatursignale zur Überwachung der Rohranordnung auf teilweise Verstopfung momentan insoweit nicht geeignet sind, als eine Temperatur des Mediums im Meßwandler von einer Temperatur des Meßwandler-Gehäuses nicht oder nur ungenügend abweicht, etwa für den Fall, daß eine anhand der Temperatursignale ermittelte Temperaturdifferenz zwischen Meßwandler-Gehäuse und Medium für einen vorgegebenen Zeitraum von mehr als 5 min im zeitlichen Mittel weniger als 5 Kelvin beträgt. Zum Erzeugen eines möglichst schnell auf allfällige Änderung einer zwischen der Umgebung des Meßwandlers und dem durch diesen hindurchströmenden Medium existierenden Temperaturdifferenz reagierenden Temperatursignals kann es hierbei von Vorteil sein, den dritten Temperatursensor nah an einem der beiden Strömungsteiler zu plazieren.

Für den eingangs erwähnten Fall, daß der Meßwandler zum Führen von strömendem Medium vier unter Bildung einer Rohranordnung mit vier strömungstechnisch parallel geschalteten Strömungspfaden an die Strömungsteiler angeschlossene Meßrohre aufweist, kann - alternativ oder in Ergänzung zur Messung der einer Temperatur des Meßwandler-Gehäuses - die Temperaturmeßanordnung zum Überwachen der Rohranordnung ferner einen dritten Temperatursensor zum Erzeugen eines von einer Temperatur eines dritten Meßrohrs des Meßwandlers abhängigen Temperatursignals und wenigstens einen vierten Temperatursensor zum Erzeugen eines von einer Temperatur eines vierten Meßrohrs des Meßwandlers abhängigen Temperatursignals aufweisen. Hierbei können der dritte Temperatursensor direkt am dritten Meßrohr und der vierte Temperatursensor direkt am vierten Meßrohr fixiert werden, etwa jeweils im Bereich der einlaßseitigen Kopplungszone.

Zur Verbesserung der Genauigkeit bzw. der Aussagefähigkeit der mittels der Umformer-Elektronik realisierten Überwachung der Rohranordnung, insb. auch zur Vermeidung von eine Verstopfung der Rohranordnung fälschlicherweise signalisierenden Fehlalarmen bzw. zur Validierung der von der Temperaturmeßanordnung gelieferten Temperaturmeßsignale, ist ferner vorgesehen, daß die Umformer-Elektronik den teilweise Verstopfung der Rohranordnung signalisierenden Alarm auch unter Verwendung wenigstens eines der Schwingungen der Meßrohre repräsentierenden Vibrationsmeßsignale und/oder unter Verwendung des wenigstens eine Erregersignals generiert. Basierend auf der Erkenntnis, daß sich bei teilweiser Verstopfung der Rohranordnung deren Schwingungsverhalten, beispielsweise die Eigenfrequenz des aktiv angeregten Nutzmodes bzw. auch der aktiv angeregte Nutzmodes hinsichtlich seiner Schwingungsform, signifikant verändertbeispielsweise derart, daß infolge von nunmehr latenter Unbalance in der Rohranordnung zusätzlich zu den gegengleichen Biegeschwingungen im aktive angeregten Nutzmode auch parallele Schwingungen der Meßrohre angeregt sind und somit eine im Vergleich zum ungestörten Betrieb erhöhte Erregerleistung zur Aufrechterhaltung der gegengleichen Biegeschwingungen erforderlich ist - können durch einfachen Vergleich von vom Vibrationssignal bzw. vom Erregersignal abgeleiteten Signalparametern, beispielsweise einem zeitlicher Mittelwert einer Signalamplitude, einer Streuung einer Signalamplitude, einer Signalfrequenz oder dergleichen, mit dafür entsprechenden vorgegebenen, beispielsweise experimentell bestimmter, Grenzwerten zusätzlich die allfällige Verstopfung der Rohranordnung betreffende Informationen gewonnen und bei der Generierung des Alarms entsprechend berücksichtigt werden. Demnach generiert die Umformer-Elektronik den teilweise Verstopfung der Rohranordnung signalisierenden Alarm gemäß einer weiteren Ausgestaltung der Erfindung auch unter Verwendung wenigstens eines der Schwingungen der Meßrohre repräsentierenden Vibrationsmeßsignale und/oder unter Verwendung des wenigstens eine Erregersignals, falls nämliches Vibrationsmeßsignal bzw. nämliches Erregersignal hinsichtlich wenigstens eines davon jeweils abgeleiteten Signalparameters, insb. einem zeitlichen Mittelwert einer Signalamplitude, einer Streuung einer Signalamplitude, einer Signalfrequenz oder dergleichen, von einem dafür entsprechend vorgegebenen Grenzwert abweicht.

Durch die Verwendung einer Temperaturmeßanordnung der vorgenannten Art ist es ferner möglich, mittels des erfindungsgemäßen Meßsystems die Temperatur, $\vartheta$, des Mediums an sich mit einer höheren Genauigkeit bzw. auch einer höheren Verläßlichkeit zu ermitteln, als beispielsweise mit konventionellen Meßsystemen der in Rede stehenden Art mit lediglich einem einzigen die Temperatur vom jeweiligen Medium erfassenden Temperatursensor, beispielsweise gemäß den in der eingangs erwähnten US-A 47 68 384. Daher erzeugt die Umformer-Elektronik gemäß einer weiteren Ausgestaltung der Erfindung unter Verwendung sowohl des mittels des ersten Temperatursensors erzeugten Temperatursignals als auch des mittels des zweiten Temperatursensors erzeugten Temperatursignals - ggf. auch unter Verwendung weiterer in der Temperaturmeßanordnung allfällig vorgesehener Meßrohrtemperaturen erfassender Temperatursensoren- zumindest zeitweise, beispielsweise nur dann, wenn die Umformer-Elektronik keine teilweise Verstopfung der Rohranordnung detektiert, einen Temperatur-Meßwert $X_\vartheta$, der eine Temperatur des in der Rohranordnung strömenden Mediums repräsentiert.

Die vorgenannten, insb. auch die dem Erzeugen des Alarms $X_{ERR}$ bzw. anderer der vorgenannten Meßwerte jeweils dienenden, Rechenfunktionen können z.B. mittels des oben erwähnten Mikrocomputers der Auswerte-Schaltung $\mu$C oder beispielsweise auch einem darin entsprechend vorgesehenen digitalen Signalprozessors DSP sehr einfach realisiert sein. Das Erstellen und Implementieren von entsprechenden Algorithmen, die mit den vorbeschriebenen Formeln korrespondierenden oder beispielsweise auch die Funktionsweise der erwähnten Amplituden- bzw. Frequenzregelschaltung für die Erregeranordnung nachbilden, sowie deren Übersetzung in der Umformer-Elektronik entsprechend ausführbare Programm-Codes ist dem Fachmann an und für sich geläufig und bedarf daher -jedenfalls in Kenntnis der vorliegenden Erfindung - keiner detailierteren Erläuterung. Selbstverständlich können vorgenannte Formeln bzw. andere mit der Umformer-Elektronik realisierte Funktionalitäten des Meßsystems auch ohne weiteres ganz oder teilweise mittels entsprechender diskret aufgebauter und/oder hybriden, also gemischt analogdigitalen, Rechenschaltungen in der Umformer-Elektronik ME realisiert werden.

**Patentansprüche**

1. Verfahren zur Überwachung einer mittels eines ersten Meßrohrs und wenigstens eines dazu strömungstechnisch parallel geschalteten zweiten Meßrohrs gebildeten Rohranordnung eines Meßwandlers, welches Verfahren folgende Schritte umfaßt:

- Strömenlassen von Medium durch die Rohranordnung;
- Ermitteln einer zwischen dem ersten Meßrohr und dem zweiten Meßrohr existierenden Temperaturdifferenz; und
- Signalisieren einer teilweisen Verstopfung der Rohranordnung - insb. einer Verstopfung genau eines der Meßrohre oder einer Verstopfung des ersten Meßrohrs, bei gleichzeitig nicht-verstopftem zweiten Meßrohr -, falls die ermittelte Temperaturdifferenz von einem vorgegebenen, eine nicht verstopfte Rohranordnung repräsentierenden Grenzwert für die Temperaturdifferenz abweicht.

2. Meßsystem für ein in einer Rohrleitung strömendes Medium, insb. einer wäßrigen Flüssigkeit, einem Schlamm, einer Paste oder einem anderen fließfähigem Material, welches, insb. als Kompakt-Meßgerät und/oder als Coriolis-Massendurchfluß-Meßgerät ausgebildete, Meßsystem zur Verwirklichung des Verfahrens gemäß Anspruch 1 eingerichtet ist und welches Meßsystem einen im Betrieb vom Medium durchströmten Meßwandler zum Erzeugen von mit Parametern des strömenden Mediums, insb. einer Massendurchflußrate, einer Dichte und/oder einer Viskosität, korrespondierenden Vibrationssignalen sowie eine mit dem Meßwandler elektrisch gekoppelte Umformer-Elektronik zum Ansteuern des Meßwandlers und zum Auswerten von vom Meßwandler gelieferten Meßsignalen umfaßt,

- wobei der Meßwandler aufweist:
- einen einlaßseitigen ersten Strömungsteiler $(20_1)$ mit wenigstens zwei voneinander beabstandeten Strömungsöffnungen $(20_{1A}, 20_{1B}, 20_{1C}, 20_{1D})$, die dem Aufteilen von einströmendem Medium in zwei Teilströmungen dienen,

-- einen auslaßseitigen zweiten Strömungsteiler $(20_2)$ mit wenigsten zwei voneinander beabstandeten Strömungsöffnungen $(20_{2A}, 20_{2B}, 20_{2C}, 20_{2D})$ die dem Wiederzusammenführen der Teilströmungen dienen,
-- eine Rohranordnung mit einem ersten Messrohr $(18_1)$ und einem zweiten Messrohr $(18_2)$, wobei das erste Meßrohr (181) der Rohranordnung mit einem einlaßseitigen ersten Meßrohrende in eine erste Strömungsöffnung (201A) des ersten Strömungsteilers $(20_1)$ und mit einem

auslaßseitigen zweiten Meßrohrende in eine erste Strömungsöffnung $(20_{2A})$ des zweiten Strömungsteilers $(20_2)$ und das zweite Meßrohr $(18_2)$ der Rohranordnung mit einem einlaßseitigen ersten Meßrohrende in eine zweite Strömungsöffnung $(20_{1B})$ des ersten Strömungsteilers $(20_1)$ und mit einem auslaßseitigen zweiten Meßrohrende in eine zweite Strömungsöffnung $(20_{2B})$ des zweiten Strömungsteilers $(20_2)$ münden, sowie

- zum Überwachen der Rohranordnung eine an die Umformer-Elektronik angeschlossene Temperaturmeßanordnung mit einem, insb. direkt am ersten Meßrohr fixierten und/oder als Widerstandsthermometer ausgebildeten, ersten Temperatursensor zum Erzeugen eines von einer Temperatur des ersten Meßrohrs abhängigen Temperatursignals und wenigstens einem, insb. direkt am zweiten Meßrohr fixierten und/oder als Widerstandsthermometer ausgebildeten, zweiten Temperatursensor zum Erzeugen eines von einer Temperatur des zweiten Meßrohrs abhängigen Temperatursignals;
- und wobei die Umformer-Elektronik eingerichtet ist, unter Verwendung des mittels des ersten Temperatursensors erzeugten Temperatursignals und des mittels des, insb. zum ersten Temperatursensor im wesentlichen baugleichen, zweiten Temperatursensors erzeugten Temperatursignals einen eine teilweise Verstopfung der Rohranordnung - insb. einer Verstopfung genau eines der Meßrohre oder einer Verstopfung des ersten Meßrohrs, bei gleichzeitig nicht verstopftem zweiten Meßrohr - signalisierenden Alarm zu generieren, nämlich unter Verwendung eines mittels des vom ersten Temperatursensors erzeugten Temperatursignals und mittels des vom zweiten Temperatursensors erzeugten Temperatursignals gebildeten Temperatur-Differenzsignals, das die zwischen dem ersten Meßrohr und dem zweiten Meßrohr existierenden Temperaturdifferenz repräsentiert, den eine teilweise Verstopfung der Rohranordnung signalisierenden Alarm zu generieren, falls die vom Temperatur-Differenzsignal repräsentierte Temperaturdifferenz von einem dafür vorgegebenen, eine nicht verstopfte Rohranordnung repräsentierenden Grenzwert abweicht.

3. Meßsystem gemäß Anspruch 2, wobei die Umformer-Elektronik eingerichtet ist, unter Verwendung des mittels des ersten Temperatursensors erzeugten Temperatursignals und des mittels des, insb. zum ersten Temperatursensor im wesentlichen baugleichen, zweiten Temperatursensors erzeugten Temperatursignals einen eine teilweise Verstopfung der Rohranordnung signalisierenden Alarm zu generieren, falls das mittels des ersten Temperatursensors erzeugte Temperatursignal und das mittels des zweiten Temperatursensors erzeugte Temperatursignal hinsichtlich wenigstens eines davon jeweils abgeleiteten Signalparameters, insb. einem zeitlichen Mittelwert einer Signalamplitude jedes der beiden Temperatursignale, einer Streuung einer Signalamplitude jedes der beiden Temperatursignale oder einer Kreuzkorrelation der beiden Temperatursignale, über ein dafür entsprechend vorgegebenen Grenzwert hinausgehend voneinander abweichen.

4. Meßsystem gemäß einem der Ansprüche 2 bis 3,

   - wobei der erste Temperatursensor und der zweite Temperatursensor so ausgebildet und im Meßwandler plaziert sind, daß der erste Temperatursensor etwa gleich schnell mit einer Änderung von dessen Temperatursignal auf eine Änderung der Temperatur des ersten Meßrohrs reagiert wie der der zweite Temperatursensor mit einer Änderung von dessen Temperatursignal auf eine Änderung der Temperatur des zweiten Meßrohrs; und/oder

   - wobei der erste Temperatursensor und der zweite Temperatursensor so ausgebildet und im Meßwandler plaziert sind, daß das mittels des ersten Temperatursensors erzeugte Temperatursignal überwiegend von der Temperatur des ersten Meßrohrs und das mittels des zweiten Temperatursensors erzeugte Temperatursignal überwiegend von der Temperatur des zweiten Meßrohrs abhängig sind; und/oder

   - wobei der erste Temperatursensor und der zweite Temperatursensor so ausgebildet und im Meßwandler plaziert sind, daß das mittels des ersten Temperatursensors erzeugte Temperatursignal mehr mit der Temperatur des ersten Meßrohrs korreliert ist als das mittels des zweiten Temperatursensors erzeugte Temperatursignal; und/oder

   - wobei der erste Temperatursensor und der zweite Temperatursensor so ausgebildet und im Meßwandler plaziert sind, daß das mittels des zweiten Temperatursensors erzeugte Temperatursignal mehr mit der Temperatur des zweiten Meßrohrs korreliert ist als das mittels des ersten Temperatursensors erzeugte Temperatursignal.

5. Meßsystem gemäß einem der Ansprüche 2 bis 4,

   - wobei der erste Temperatursensor am ersten Meßrohr fixiert ist; und/oder
   - wobei der zweite Temperatursensor am zweiten Meßrohr fixiert ist.

6. Meßsystem gemäß einem vorherigen Anspruch,

   - wobei außer dem ersten Temperatursensor kein weiterer Temperatursensor am ersten Meßrohr fixiert ist; und/oder
   - wobei außer dem zweiten Temperatursensor kein weiterer Temperatursensor am zweiten Meßrohr fixiert ist.

7. Meßsystem gemäß einem der Ansprüche 2 bis 6, wobei die Umformer-Elektronik eingerichtet ist, unter Verwendung des mittels des ersten Temperatursensors erzeugten Temperatursignals und des mittels des, insb. zum ersten Temperatursensor im wesentlichen baugleichen, zweiten Temperatursensors erzeugten Temperatursignals zumindest zeitweise einen Temperatur-Meßwert ($X_9$) zu erzeugen, der eine Temperatur des in der Rohranordnung strömenden Mediums repräsentiert, insb. dann, wenn die Umformer-Elektronik keine teilweise Verstopfung der Rohranordnung detektiert.

8. Meßsystem gemäß einem der Ansprüche 2 bis 7, wobei der Meßwandler vier unter Bildung einer Rohranordnung mit vier strömungstechnisch parallel geschalteten Strömungspfaden an die, insb. baugleichen, Strömungsteiler ($20_1$, $20_2$) angeschlossene Meßrohre ($18_1$, $18_2$, $18_3$, $18_4$) zum Führen von strömendem Medium aufweist.

9. Meßsystem gemäß dem vorherigen Anspruch, wobei die Temperaturmeßanordnung einen dritten Temperatursensor zum Erzeugen eines von einer Temperatur eines dritten Meßrohrs des Meßwandlers abhängigen Temperatursignals und wenigstens einen vierten Temperatursensor zum Erzeugen eines von einer Temperatur eines vierten Meßrohrs des Meßwandlers abhängigen Temperatursignals aufweist.

10. Meßsystem gemäß einem der Ansprüche 2 bis 9, wobei der Meßwandler weiters ein Meßwandler-Gehäuse ($7_1$) mit einem, insb. einen Anschlußflansch für ein Medium dem Meßwandler zuführendes Leitungssegment aufweisenden und/oder mittels des ersten Strömungsteiler ($20_1$) gebildeten, einlaßseitigen ersten Gehäuseende und einem, insb. einen Anschlußflansch für ein Medium vom Meßwandler abführendes Leitungssegment aufweisenden und/oder mittels des zweiten Strömungsteiler ($20_2$) gebildeten, auslaßseitigen zweiten Gehäuseende umfaßt.

11. Meßsystem gemäß dem vorherigen Anspruch, wobei die Temperaturmeßanordnung wenigstens einen, insb. direkt am Meßwandler-Gehäuse ($7_1$) fixierten und/oder als Widerstandsthermometer ausgebildeten, dritten Temperatursensor zum Erzeugen eines von einer Temperatur des Meßwandler-Gehäuse ($7_1$) abhängigen Temperatursignals aufweist.

12. Meßsystem gemäß dem vorherigen Anspruch,

- wobei die Umformer-Elektronik eingerichtet ist, unter Verwendung des vom ersten Temperatursensors erzeugten Temperatursignals sowie des vom dritten Temperatursensor erzeugten Temperatursignals eine Meldung zu generieren, die signalisiert, daß die von der Temperaturmeßanordnung gelieferten Temperatursignale zur Überwachung der Rohranordnung auf teilweise Verstopfung insoweit geeignet sind, als eine Temperatur des Mediums im Meßwandler von einer Temperatur des Meßwandler-Gehäuses abweicht; und/oder
- wobei die Umformer-Elektronik eingerichtet ist, unter Verwendung des vom ersten Temperatursensors erzeugten Temperatursignals sowie des vom dritten Temperatursensor erzeugten Temperatursignals eine Meldung zu generieren, die signalisiert, daß die von der Temperaturmeßanordnung gelieferten Temperatursignale zur Überwachung der Rohranordnung auf teilweise Verstopfung momentan insoweit nicht geeignet sind, als eine Temperatur des Mediums im Meßwandler von einer Temperatur des Meßwandler-Gehäuses nicht oder nur ungenügend abweicht.

13. Meßsystem gemäß einem der Ansprüche 2 bis 12, wobei der Meßwandler weiters wenigstens einen elektro-mechanischen, insb. elektrodynamischen, Schwingungserreger zum Anregen und/oder Aufrechterhalten von Vibrationen der wenigstens zwei Meßrohre, insb. von gegengleichen Biegeschwingungen jedes der wenigstens zwei Meßrohre um eine ein einlaßseitiges erstes Meßrohrende des jeweiligen Meßrohrs und ein auslaßseitiges zweites Meßrohrende des jeweiligen Meßrohrs jeweils imaginär verbindende gedachte Schwingungsachse mit einer natürlichen Resonanzfrequenz des Meßwandlers, umfaßt.

14. Meßsystem gemäß einem der Ansprüche 2 bis 13, wobei der Meßwandler weiters umfaßt:

- einen, insb. elektrodynamischen, ersten Schwingungssensor zum Erfassen von einlaßseitigen Vibrationen der wenigstens zwei Meßrohre und zum Erzeugen eines Vibrationen zumindest eines der Meßrohre, insb. einlaßseitige Vibrationen des ersten Meßrohrs relativ zum zweiten Meßrohr, repräsentierenden ersten Vibrationssignals des Meßwandlers; und
- einen, insb. elektrodynamischen, zweiten Schwingungssensor zum Erfassen von auslaßseitigen Vibrationen der wenigstens zwei Meßrohre und zum Erzeugen eines Vibrationen zumindest eines der Meßrohre, insb. auslaßseitige Vibrationen des ersten Meßrohrs relativ zum zweiten Meßrohr, repräsentierenden zweiten Vibrationssignals des Meßwandlers.

15. Meßsystem gemäß Anspruch 14,

- wobei die Umformer-Elektronik eingerichtet ist, den teilweise Verstopfung der Rohranordnung signalisierenden Alarm unter Verwendung wenigstens eines der Vibrationssignale zu generieren, falls nämliches Vibrationssignal hinsichtlich wenigstens eines davon jeweils abgeleiteten Signalparameters, insb. einem zeitlichen Mittelwert einer Signalamplitude, einer Streuung einer Signalamplitude oder einer Signalfrequenz, von einem dafür entsprechend vorgegebenen Grenzwert abweicht; und/oder
- wobei die Umformer-Elektronik eingerichtet ist, mittels des ersten Vibrationssignals und mittels des zweiten Vibrationssignals einen Phasendifferenz-Meßwert ($X_{\Delta\varphi}$) zu generieren, der eine zwischen dem ersten Vibrationssignal ($s_1$) und dem zweiten Vibrationssignal ($s_2$) existierenden, insb. von einer Massendurchflußrate, $\dot{m}$, von im Meßwandler strömendem Medium abhängige, Phasendifferenz, $\Delta\varphi_l$, repräsentiert; und/oder
- wobei die Umformer-Elektronik eingerichtet ist, mittels des ersten Vibrationssignals und mittels des zweiten Vibrationssignals einen Massendurchfluß-Meßwert ($X_m$) zu generieren, der eine Massendurchflußrate, $\dot{m}$, von im Meßwandler strömendem Medium repräsentiert.

**Claims**

1. Procedure to monitor a tube arrangement of a transducer, said arrangement being formed by a first measuring tube and at least a second measuring tube which is switched in parallel to the first tube in terms of flow, said procedure comprising the following steps:

- Medium is allowed to flow through the tube arrangement;
- Determination of a temperature difference between the first measuring tube and the second measuring tube; and
- Signaling of a partial blockage of the tube arrangement - particularly a blockage of precisely one of the measuring tubes or a blockage of the first measuring tube, with the second measuring tube not being blocked at the same time - if the determined temperature difference differs from a predefined limit value for the temperature difference that represents a tube arrangement that is not blocked.

2. Measuring system for a medium flowing through a pipe, particularly an aqueous liquid, a sludge, a paste or another material that is capable of flowing, wherein said measuring system is designed particularly as a compact measuring device and/or as a Coriolis mass flow measuring device to implement the procedure as claimed in Claim 1, and wherein said measuring system comprises a transducer through which medium flows during operation, said transducer being designed to generate vibration signals corresponding to parameters of the flowing medium, particularly a mass flow rate, a density and/or a viscosity, as well as converter electronics electrically coupled with the transducer, said electronics being designed to control the transducer and to evaluate measuring signals provided by the transducer,

- wherein the transducer comprises:

-- a first flow divider ($20_1$) on the inlet side with at least two flow openings ($20_{1A}$, $20_{1B}$, $20_{1C}$, $20_{1D}$) located at a distance from one another, said flow dividers serving to split inflowing medium into two partial streams,
-- a second flow divider ($20_2$) on the outlet side with at least two flow openings ($20_{2A}$, $20_{2B}$, $20_{2C}$, $20_{2D}$) located at a distance from one another, said flow dividers serving to rejoin the partial streams,
-- a tube arrangement with a first measuring tube ($18_1$) and a second measuring tube ($18_2$), wherein the first measuring tube ($18_1$) of the tube arrangement enters into a first flow opening ($20_{1A}$) of the first flow divider ($20_1$) with a first measuring tube end on the inlet side and enters into a first flow opening ($20_{2A}$) of the second flow divider ($20_2$) with a second measuring tube end on the outlet side, and the second measuring tube ($18_2$) of the tube arrangement enters into a second flow opening ($20_{1B}$) of the first flow divider ($20_1$) with a first measuring tube end on the inlet side and enters into a second flow opening ($20_{2B}$) of the second flow divider ($20_2$) with a second measuring tube end on the outlet side, and
-- a temperature measuring arrangement which is designed to monitor the tube arrangement and is connected to the converter electronics, wherein said measuring arrangement comprises a first temperature sensor, particularly fixed directly on the first measuring tube and/or designed as a resistance thermometer, said sensor being designed to generate a temperature signal that depends on a temperature of the first measuring tube, and at least a second temperature sensor, particularly fixed directly on the second measuring tube and/or designed as a resistance thermometer, said sensor being designed to generate a temperature signal that depends on a temperature of the second measuring tube;

- and wherein the converter electronics are designed to generate an alarm - using the temperature signal generated by the first temperature sensor and the temperature signal generated by the second temperature sensor, said second temperature sensor especially being essentially identical in design to the first temperature sensor - said alarm signaling a partial blockage of the tube arrangement - particularly a blockage of exactly one of the measuring tubes or a blockage of the first measuring tube with the second measuring tube simultaneously not blocked - particularly by using a temperature differential signal formed by the temperature signal generated by the first temperature sensor and the temperature signal generated by the second temperature sensor, said differential signal representing the temperature difference that exists between the first measuring tube and the second measuring tube,

to generate an alarm signaling a partial blockage of the tube arrangement if the temperature difference represented by the temperature differential signal deviates from a limit value that is specified for this and represents an unblocked tube arrangement.

3. Measuring system as claimed in Claim 2, wherein the converter electronics are designed to generate an alarm - using the temperature signal generated by the first temperature sensor and the temperature signal generated by the second temperature sensor, said second temperature sensor especially being essentially identical in design to the first temperature sensor - said alarm signaling a partial blockage of the tube arrangement if the temperature signal generated by the first temperature sensor and the temperature signal generated by the second temperature sensor differ from one another beyond a predefined limit value with regard to at least one signal parameter derived from the signal, particularly an average value over time of a signal amplitude of each of the two temperature signals, a scattering of a signal amplitude of each of the two temperature signals or a cross relation of the two temperature signals.

**4.** Measuring system as claimed in one of the Claims 2 to 3,

- wherein the first temperature sensor and the second temperature sensor are designed and positioned in the transducer in such a way that the first temperature sensor reacts approximately at the same speed, with a change in its temperature signal, to a change in the temperature of the first measuring tube, as that of the second temperature sensor with a change in its temperature signal to a change in the temperature of the second measuring tube; and/or

- wherein the first temperature sensor and the second temperature sensor are designed and positioned in the transducer in such a way that the temperature signal generated by the first temperature sensor is primarily dependent on the temperature of the first measuring tube and the temperature signal generated by the second temperature sensor is primarily dependent on the temperature of the second measuring tube; and/or

- wherein the first temperature sensor and the second temperature sensor are designed and positioned in the transducer in such a way that the temperature signal generated by the first temperature sensor correlates more with the temperature of the first measuring tube than the temperature signal generated by the second temperature sensor; and/or

- wherein the first temperature sensor and the second temperature sensor are designed and positioned in the transducer in such a way that the temperature signal generated by the second temperature sensor correlates more with the temperature of the second measuring tube than the temperature signal generated by the first temperature sensor.

**5.** Measuring system as claimed in one of the Claims 2 to 4,

- wherein the first temperature sensor is fixed on the first measuring tube; and/or
- wherein the second temperature sensor is fixed on the second measuring tube.

**6.** Measuring system as claimed in a previous claim,

- wherein no further temperature sensor is fixed on the first measuring tube apart from the first temperature sensor; and/or
- wherein no further temperature sensor is fixed on the second measuring tube apart from the second temperature sensor.

**7.** Measuring system as claimed in one of the Claims 2 to 6, wherein the converter electronics are configured to generate at least intermittently a temperature measured value (Xe) using the temperature signal generated by the first temperature sensor and the temperature signal generated by the second temperature sensor, said second temperature sensor being essentially identical in design to the first temperature sensor, said temperature measured value representing a temperature of the medium flowing through the tube arrangement, particularly if the converter electronics do not detect any partial blockage of the tube arrangement.

**8.** Measuring system as claimed in one of the Claims 2 to 7, wherein the transducer comprises four measuring tubes ($18_1$, $18_2$, $18_3$, $18_4$), which form a tube arrangement with four flow paths which are switched in parallel in terms of flow, connected to the flow dividers ($20_1$, $20_2$), particularly identical in design, said tubes being designed to conduct flowing medium.

**9.** Measuring system as claimed in the previous claim, wherein the temperature measuring arrangement has a third temperature sensor designed to generate a temperature signal that depends on a temperature of a third measuring tube of the transducer, and at least a fourth temperature sensor designed to generate a temperature signal that depends on a temperature of a fourth measuring tube of the transducer.

**10.** Measuring system as claimed in one of the Claims 2 to 9, wherein the transducer further comprises a transducer housing ($7_1$) with a first housing end on the inlet side, particularly having a connection flange for a pipe segment that conducts medium to the transducer and/or formed by the first flow divider ($20_1$) and a second housing end on the outlet side, particularly having a connection flange for a pipe segment that conducts medium away from the transducer and/or formed by the second flow divider ($20_2$).

**11.** Measuring system as claimed in the previous claim, wherein the temperature measuring arrangement comprises at least a third temperature sensor, particularly fixed directly on the transducer housing ($7_1$) and/or designed as a resistance thermometer, said sensor being designed to generate a temperature signal that depends on a temperature of the transducer housing ($7_1$).

**12.** Measuring system as claimed in the previous claim,

- wherein the converter electronics are designed to generate a message using the temperature signal generated by the first temperature sensor and the temperature signal generated by the third temperature sensor, wherein said message signals that the temperature signals delivered by the temperature measuring arrangement are suitable for monitoring the tube arrangement with regard to a partial blockage to the extent that a temperature of the medium in the transducer differs from a temperature of the transducer housing; and/or

- wherein the converter electronics are designed to generate a message using the temperature signal generated by the first temperature sensor and the temperature signal generated by the third temperature sensor, wherein said message signals that the temperature signals delivered by the temperature measuring arrangement are not currently suitable for monitoring the tube arrangement with regard to a partial blockage to the extent that a temperature of the medium in the transducer does not differ at all or only differs insufficiently from a temperature of the transducer housing.

13. Measuring system as claimed in one of the Claims 2 to 12, wherein the transducer further comprises at least an electromechanical, particularly an electrodynamic, vibration generator designed to excite and/or maintain vibrations of the at least two measuring tubes, particularly mirror-inverted flexural vibrations of each of the at least two measuring tubes around an imaginary axis of vibration, connecting an inlet-side first measuring tube end of the measuring tube and an outlet-side second measuring tube end of the measuring tube, with a natural resonance frequency of the transducer.

14. Measuring system as claimed in one of the Claims 2 to 13, wherein the transducer further comprises:

- a first vibration sensor, particularly electrodynamic, designed to measure inlet-side vibrations of the at least two measuring tubes and to generate a first vibration signal of the transducer representing vibrations of at least one of the measuring tubes, particularly inlet-side vibrations of the first measuring tube in relation to the second measuring tube; and
- a second vibration sensor, particularly electrodynamic, designed to measure outlet-side vibrations of the at least two measuring tubes and to generate a second vibration signal of the transducer representing vibrations of at least one of the measuring tubes, particularly outlet-side vibrations of the first measuring tube in relation to the second measuring tube.

15. Measuring system as claimed in Claim 14,

- wherein the converter electronics are configured to generate the alarm signaling the partial blockage of the tube arrangement using at least one of the vibration signals if said vibration signal differs from a predefined limit value in terms of at least one signal parameter derived from the signal, particularly an average value of a signal amplitude over time, a scattering of a signal amplitude or a signal frequency, and/or

- wherein the converter electronics are configured to generate a phase difference measured value ($X_{\Delta\varphi}$) using the first vibration signal and the second vibration signal, said measured value representing a phase difference, $\Delta\varphi i$, existing between the first vibration signal ($s_1$) and the second vibration signal ($s_2$), particularly dependant on a mass flow rate, $m$, of the medium flowing through the transducer; and/or

- wherein the converter electronics are configured to generate a mass flow measured value ($X_m$) using the first vibration signal and the second vibration signal, said measured value representing a mass flow rate, $m$, of the medium flowing through the transducer.

## Revendications

1. Procédé destiné à la surveillance d'un arrangement de tubes d'un transducteur, lequel arrangement est formé d'un premier tube de mesure et au moins d'un deuxième tube de mesure couplé, en terme d'écoulement, parallèlement au premier tube, lequel procédé comprend les étapes suivantes :

   - Écoulement du produit à travers l'arrangement de tubes ;
   - Détermination d'une différence de température existant entre le premier tube de mesure et le deuxième tube de mesure ; et
   - Signalisation d'un colmatage partiel de l'agencement de tubes - notamment d'un colmatage exactement de l'un des tubes de mesure ou un colmatage du premier tube de mesure, avec en même temps le deuxième tube de mesure non colmaté - au cas où la différence de température diffère d'un seuil prédéfini pour la différence de température, lequel seuil représente un arrangement de tubes non colmaté.

2. Système de mesure pour un produit s'écoulant dans une conduite, notamment un liquide aqueux, une boue, une pâte ou une autre matière apte à s'écouler, lequel système de mesure est conçu notamment en tant qu'appareil de mesure compact et/ou en tant que débitmètre massique Coriolis en vue de la réalisation du procédé selon la revendication 1, et lequel système de mesure comprend un transducteur parcouru, en fonctionnement, par le produit, lequel transducteur est destiné à la génération de signaux de vibration correspondant à des paramètres du produit en écoulement, notamment un débit massique, une densité et/ou une viscosité, ainsi qu'une électronique de transmetteur couplée électriquement avec le transducteur, laquelle électronique est destinée à la commande du transducteur et à l'exploitation des signaux de mesure délivrés par le transducteur,

- le transducteur comprenant :

-- un premier diviseur de débit ($20_1$) côté entrée avec au moins deux ouvertures d'écoulement ($20_{1A}$, $20_{1B}$, $20_{1C}$, $20_{1D}$) espacées les unes des autres, qui servent à la rejonction des écoulements partiels,

-- un deuxième diviseur de débit ($20_2$) côté sortie avec au moins deux ouvertures d'écoulement ($20_{2A}$, $20_{2B}$, $20_{2C}$, $20_{2D}$) espacées les unes des autres, qui servent à la rejonction des écoulements partiels,

-- un arrangement de tubes avec un premier tube de mesure ($18_1$) et un deuxième tube de mesure ($18_2$), le premier tube de mesure ($18_1$) de l'arrangement de tubes débouchant avec une première extrémité de tube de mesure côté entrée dans une première ouverture d'écoulement ($20_{1A}$) du premier diviseur de débit ($20_1$) et avec une deuxième extrémité de tube de mesure côté sortie dans une première ouverture d'écoulement ($20_{2A}$) du deuxième diviseur de débit ($20_2$), et le deuxième tube de mesure ($18_2$) de l'arrangement de tubes débouchant avec une première extrémité de tube de mesure côté entrée dans une deuxième ouverture d'écoulement ($20_{1B}$) du premier diviseur de débit ($20_1$) et avec une deuxième extrémité de tube de mesure côté sortie dans une deuxième ouverture d'écoulement ($20_{2B}$) du deuxième diviseur de débit ($20_2$), ainsi que

-- un arrangement de mesure de température destiné à la surveillance de l'arrangement de tubes et raccordé à l'électronique de transmetteur, lequel arrangement de mesure comprend un premier capteur de température, notamment fixé directement sur le premier tube de mesure et/ou conçu en tant que thermomètre à résistance, lequel capteur est destiné à la génération d'un signal de température dépendant d'une température du premier tube de mesure, et au moins un deuxième capteur de température, notamment fixé directement sur le deuxième tube de mesure et/ou conçu en tant que thermomètre à résistance, lequel capteur est destiné à la génération d'un signal de température dépendant d'une température du deuxième tube de mesure ;

- et système pour lequel l'électronique de transmetteur est conçue de telle sorte à générer - en utilisant le signal de température généré au moyen du premier capteur de température et le signal de température généré au moyen du deuxième capteur de température, lequel est pour l'essentiel de conception identique au premier capteur de température - une alarme signalant un colmatage partiel de l'arrangement de tubes - notamment un colmatage d'exactement de l'un des tubes de mesure ou un colmatage du premier tube de mesure avec en même temps le deuxième tube de mesure non colmaté - notamment en utilisant un signal de différence de température formé par le signal de température généré par le premier capteur de température et le signal de température généré par le deuxième capteur de température, lequel signal de différence représente la différence de température existant entre le premier tube de mesure et le deuxième tube de mesure,

à générer l'alarme signalant un colmatage partiel de l'arrangement de tubes au cas où la différence de température, représentée par le signal de différence de température, diffère d'un seuil représentant un arrangement de tubes non colmaté.

3. Système de mesure selon la revendication 2, pour lequel l'électronique de transmetteur est conçue de telle sorte à générer - en utilisant le signal de température généré au moyen du premier capteur de température et le signal de température généré au moyen du deuxième capteur de température, lequel est pour l'essentiel de conception identique au premier capteur de température - une alarme signalant un colmatage partiel de l'arrangement de tubes, au cas où le signal de température généré au moyen du premier capteur de température et le signal de température généré au moyen du deuxième capteur de température diffèrent l'un par rapport à l'autre - concernant un paramètre de signal respectivement dérivé de ces signaux, notamment une moyenne dans le temps d'une amplitude de signal de chacun des deux signaux de température, une dispersion d'une amplitude de signal de chacun des deux signaux de température ou une corrélation croisée des deux signaux de température - au-delà d'un seuil prédéfini en conséquence.

4. Système de mesure selon l'une des revendications 2 à 3,

- pour lequel le premier capteur de température et le deuxième capteur de température sont conçus et disposés dans le transducteur de telle sorte que le premier capteur de température réagit approximativement à la même vitesse, avec un changement de son signal de température, à un changement de la température du premier tube de mesure, tout comme celle du deuxième capteur de température réagit approximativement à la même vitesse, avec un changement de son signal de température, à un changement de la température du deuxième tube de mesure ; et/ou

- pour lequel le premier capteur de température et le deuxième capteur de température sont conçus et disposés dans le transducteur de telle sorte que le signal de température généré au moyen du premier capteur de température est essentiellement dépendant de la température du premier tube de mesure et que le signal de température généré au moyen du deuxième capteur de température est essentiellement dépendant de la température du deuxième tube de mesure ; et/ou

- pour lequel le premier capteur de température et le deuxième capteur de température sont conçus et disposés dans le transducteur de telle sorte que le signal de température généré au moyen du premier capteur de température est davantage corrélé avec la température du premier tube de mesure que le signal de température généré au moyen du deuxième capteur de température ; et/ou

- pour lequel le premier capteur de température et le deuxième capteur de température sont conçus et disposés dans le transducteur de telle sorte que le signal de température généré au moyen du deuxième capteur de température est davantage corrélé avec la température du deuxième tube de mesure que le signal de température généré au moyen du premier capteur de température.

5. Système de mesure selon l'une des revendications 2 à 4,

    - pour lequel le premier capteur de température est fixé sur le premier tube de mesure ; et/ou
    - pour lequel le deuxième capteur de température est fixé sur le deuxième tube de mesure.

6. Système de mesure selon l'une des revendications précédentes,

    - pour lequel en dehors du premier capteur de température, aucun autre capteur de température n'est fixé sur le premier tube de mesure ; et/ou
    - pour lequel en dehors du deuxième capteur de température, aucun autre capteur de température n'est fixé sur le deuxième tube de mesure

7. Système de mesure selon l'une des revendications 2 à 6, pour lequel l'électronique de convertisseur est conçue de telle sorte à générer - en utilisant le signal de température généré par le premier capteur de température et le signal de température généré par le deuxième capteur de température, lequel est pour l'essentiel de conception identique au premier capteur de température - au moins temporairement une valeur mesurée de température ($X_\theta$), qui représente une température du produit s'écoulant dans l'agencement de tubes, notamment lorsque l'électronique de transmetteur ne détecte pas de colmatage partiel de l'agencement de tubes.

8. Système de mesure selon l'une des revendications 2 à 7, pour lequel le transducteur comprend quatre tubes de mesure ($18_1$, $18_2$, $18_3$, $18_4$), constituant un arrangement de tubes avec quatre chemins d'écoulement couplés en parallèle, raccordés aux diviseurs de débit ($20_1$, $20_2$), notamment de conception identique, lesquels tubes sont destinés au guidage du produit en écoulement.

9. Système de mesure selon la revendication précédente, pour lequel l'arrangement de mesure de température comprend un troisième capteur de température destiné à la génération d'un signal de température dépendant d'une température d'un troisième tube de mesure du transducteur, et au moins un quatrième capteur de température destiné à la génération d'un signal de température dépendant d'une température d'un quatrième tube de mesure du transducteur.

10. Système de mesure selon l'une des revendications 2 à 9, pour lequel le transducteur comprend en outre un boîtier de transducteur ($7_1$) avec une première extrémité de boîtier côté entrée, notamment présentant une bride de raccordement pour un segment de conduite alimentant un produit au transducteur et/ou constitué du premier diviseur de débit ($20_1$) et une deuxième extrémité de boîtier côté sortie, notamment présentant une bride de raccordement pour un segment de conduite évacuant un produit du transducteur et/ou constitué du deuxième diviseur de débit ($20_2$).

11. Système de mesure selon la revendication précédente, pour lequel l'arrangement de mesure de température comprend au moins un troisième capteur de température, notamment fixé directement sur le boîtier de transducteur ($7_1$) et/ou conçu en tant que thermomètre à résistance, lequel capteur est destiné à la génération d'un signal de température dépendant d'une température du boîtier de transducteur ($7_1$).

**12.** Système de mesure selon la revendication précédente,

- pour lequel l'électronique de transmetteur est conçue de telle sorte à générer - en utilisant le signal de température généré par le premier capteur de température, ainsi qu'en utilisant le signal de température généré par le troisième capteur de température - un message qui signale que les signaux de température délivrés par l'arrangement de mesure de température sont appropriés pour la surveillance de l'agencement de tubes par rapport à un colmatage partiel, lorsqu'une température du produit s'écoulant dans le transducteur diffère d'une température du boîtier de transducteur ; et/ou

- pour lequel l'électronique de transmetteur est conçue de telle sorte à générer - en utilisant le signal de température généré par le premier capteur de température, ainsi qu'en utilisant le signal de température généré par le troisième capteur de température - un message qui signale que les signaux de température délivrés par l'arrangement de mesure de température ne sont momentanément pas appropriés pour la surveillance de l'agencement de tubes par rapport à un colmatage partiel, lorsqu'une température du produit s'écoulant dans le transducteur ne diffère pas ou insuffisamment d'une température du boîtier de transducteur.

**13.** Système de mesure selon l'une des revendications 2 à 12, pour lequel le transducteur comprend en outre au moins un excitateur de vibrations électromécanique, notamment électrodynamique, destiné à l'excitation et/ou au maintien de vibrations des aux moins deux tubes de mesure, notamment de vibrations de flexion diamétralement opposées de chacun des deux tubes de mesures autour d'un axe de vibration imaginaire, reliant de façon imaginaire une première extrémité côté entrée du tube de mesure respectif et une deuxième extrémité côté sortie du tube de mesure respectif, avec une fréquence de résonance naturelle du transducteur.

**14.** Système de mesure selon l'une des revendications 2 à 13, pour lequel le transducteur comprend :

- un premier capteur de vibration, notamment électrodynamique, destiné à la mesure des vibrations côté entrée d'au moins deux tubes de mesure et à la génération d'un premier signal de vibration du transducteur représentant les vibrations d'au moins l'un des tubes de mesure, notamment les vibrations côté entrée du premier tube de mesure par rapport au deuxième tube de mesure ; et

- un deuxième capteur de vibration, notamment électrodynamique, destiné à la mesure des vibrations côté sortie d'au moins deux tubes de mesure et à la génération d'un deuxième signal de vibration du transducteur représentant les vibrations d'au moins l'un des tubes de mesure, notamment les vibrations côté sortie du premier tube de mesure par rapport au deuxième tube de mesure.

**15.** Système de mesure selon la revendication 14,

- pour lequel l'électronique de transmetteur est conçue de telle sorte à générer l'alarme signalant le colmatage partiel de l'agencement de tubes en utilisant au moins l'un des signaux de vibration, dans le cas où le même signal de vibration diffère - concernant au moins l'un des paramètres dérivé du signal, notamment une moyenne dans le temps d'une amplitude de signal, une dispersion de l'amplitude de signal ou d'une fréquence de signal - d'un seuil prédéfini en conséquence, et/ou

- pour lequel l'électronique de transmetteur est conçue de telle sorte à générer, au moyen du premier signal de vibration et au moyen du deuxième signal de vibration, une valeur mesurée de différence de phase ($X_{\Delta\varphi}$), qui représente une différence de phase, $\Delta\varphi$i, existant entre le premier signal de vibration ($s_1$) le deuxième signal de vibration ($s_2$), notamment dépendant d'un débit massique, *m,* du produit s'écoulant dans le transducteur ; et/ou

- pour lequel l'électronique de transmetteur est conçue de telle sorte à générer, au moyen du premier signal de vibration et au moyen du deuxième signal de vibration, une valeur mesurée de débit massique ($X_m$), qui représente un débit massique, *m,* du produit s'écoulant dans le transmetteur.

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- US 4680974 A
- US 4738144 A
- US 4768384 A
- US 4801897 A
- US 4823614 A
- US 4879911 A
- US 5009109 A
- US 5050439 A
- US 5359881 A
- US 5602345 A
- US 5734112 A
- US 5796011 A
- US 5926096 A
- US 5969264 A
- US 7127952 B
- US 6092429 A
- US 6311136 B
- US 6883387 B
- US 7325461 B
- US 7392709 B
- US 7421350 B
- WO 9608697 A
- WO 2007040468 A
- US 6651513 B
- US 7080564 B
- US 6513393 B
- JP 11264635 A
- US 6711958 B
- US 5349872 A
- US 6920798 B
- US 6311136 A
- US 6073495 A
- US 7284449 B
- US 7017424 B
- US 6910366 B
- US 6840109 B
- US 5576500 A